# EUROPEAN PATENT APPLICATION

(11) **EP 4 804 477 A1**
(43) Date of publication of application: **09.09.2026**
(21) Application number: 26162021.5
(22) Date of filing: 03.03.2026
(51) Int. Cl.: H04L 43/022, H04L 43/0864, H04L 43/091, H04L 43/106, H04L 43/16, H04L 43/0852

(54) **SYSTEMS AND METHODS FOR PERIODIC MONITORING OF NETWORK LATENCY**

(30) Priority: 04.03.2025 US 202519069506
(71) Applicant: Avago Technologies International Sales Pte. Limited, Singapore 768923 (SG)
(72) Inventor: Mamidwar, Rajesh Shankarrao, Irvine, 92618 (US); Katre, Prashant, Irvine, 92618 (US)
(74) Representative: Dilg, Haeusler, Schindelmann Patentanwaltsgesellschaft mbH

(57) **Abstract**

The disclosure describes systems and methods for periodic monitoring of network latency. A client device can receive, from each node of a plurality of nodes between the client device and a device providing access to an internet service provider, a packet identifier and a timestamp for each data packet selected by each node. The client device can identify, for each packet identifier received, a second timestamp of receipt by the client device of each data packet corresponding to each packet identifier. The client device can determine, based at least on timestamps associated with one or more packet identifiers received from each corresponding node and second timestamps for the packet identifiers, a respective latency between the client device and the corresponding node.

## Description

### FIELD OF THE DISCLOSURE

This disclosure generally relates to systems and methods for wireless communication between wireless network interfaces and wireless communication devices, including, without limitation, periodic monitoring of network latency.

### BACKGROUND

The market for wireless communications devices has been growing due to increased use of portable devices, increased connectivity, and data transfer between all manners of devices. Digital switching techniques have facilitated the large-scale deployment of affordable, easy-to-use wireless communication networks. Wireless communication can operate in accordance with various standards, such as the IEEE 802.11x (e.g., Wi-Fi technology), Bluetooth, global system for mobile communications (GSM), and code division multiple access (CDMA). Using such technologies, wireless communication devices can connect to local area networks and the internet without physical cables, communicating over radio frequencies and across various spaces and ranges.

### SUMMARY

The technical solutions of the present disclosure are directed to improving latency monitoring in communication networks. Emerging applications, such as video conferencing, augmented reality/virtual reality (AR/VR), and cloud gaming, can impose constraints on communication networks, particularly concerning latency. These low latency applications can depend on consistent bandwidth and low latency performance across various network components, including optical line terminals (OLTs), optical network units (ONUs), cable modems, Wi-Fi access points, Wi-Fi mesh nodes, and client devices. In this regard, isolating latency contributions from individual network components can be challenging as network traffic traverses multiple interconnected nodes within the network. Moreover, managing the volume of timestamp data generated during network operations can demand efficient collection and transmission mechanisms to prevent undue impact on overall network performance. Resource constraints, such as limited bandwidth and processing capacity at various nodes, can further complicate data collection and transmission processes, particularly in high-traffic scenarios.

Additional technical considerations can arise from device-level constraints, such as limited memory and processing capabilities on cable modems and Wi-Fi routers, which can impact the storage and management of timestamp data. Scaling the system to accommodate a growing number of users with diverse traffic profiles can present scalability challenges. Accurately measuring latency and associating it with specific network segments, such as ONUs, Wi-Fi components, or cable modem termination system (CMTS) devices, can demand robust data synchronization and analytical processes. Moreover, maintaining synchronization of timestamps associated with data packets across network nodes can be important for accurate latency calculations. Furthermore, scaling the system to handle a significant number of nodes while maintaining stable performance can demand careful consideration of resource allocation and network architecture design. These factors can collectively contribute to the challenges associated with implementing and maintaining effective latency monitoring systems in wireless communication networks.

The technical solutions disclosed herein can address inefficiencies in latency monitoring within wireless communication networks. To minimize computational complexity and storage demands at network nodes, a sample of data packets, rather than every packet, can be selected for monitoring. For example, each node in the network, such as an optical line terminal (OLT), cable modem termination system (CMTS), optical network unit (ONU), cable modem (CM), Wi-Fi access point (AP), or Wi-Fi mesh node, can log the timestamp for randomly selected data packets traversing the corresponding node. Each node can maintain synchronized clocks using a time synchronization protocol, such as precision time protocol (PTP - IEEE 1588), which can synchronize clocks across all nodes and facilitate accurate comparison of timestamps generated at different nodes. Each node can collect the timestamps (generated based on its synchronized local clock) along with associated packet identifiers (e.g., five-tuple information, transport protocol (TCP sequence number or UDP checksum/signature), and node identifiers) and transmit them to a central server incorporating a latency controller or directly to a low latency agent on the client device for analysis. The destination for the timestamps can depend on the node's position in the network topology. To reduce network overhead and computational load, rather than transmitting timestamp information for every sampled packet immediately, the nodes can periodically (at regular intervals) or invariably (at adjustable intervals) transmit a single packet's timestamp and identifier or a batch of such data after a predefined time interval or after a certain number of packets have been sampled. This periodic update of data packets can reduce network overhead and computational load.

The client device can record local/second timestamps for received data packets and store them in a data structure for a specified duration to manage memory usage. The technical solutions described herein can leverage the client-recorded timestamps and the timestamps received from each corresponding node to perform latency calculations based on the differences between these timestamps. Additionally, timestamp synchronization protocols, such as the PTP, can facilitate the accuracy of these latency measurements. In this manner, the client device can calculate the latency introduced at each hop along the network path. Such configurations can allow client devices running low latency applications to identify potential sources of latency, whether originating from the OLT/CMTS, ONU/CM, Wi-Fi AP, Wi-Fi mesh node, or other network segments. The protocol utilized for node-to-client latency measurement is also applicable to node-to-node latency measurement. Any node within the network can implement the same algorithm as the end client, functioning as a client-equivalent latency monitor. For example, the latency measurement from a CMTS to a CM can be performed by a client-equivalent latency monitoring task operating on the CM, thereby allowing nodes to determine their latency relative to other nodes in the network. The system can include a cloud server connecting all nodes, facilitating centralized data processing, analysis, and visualization of network-wide latency information. As a result, these technical solutions can provide accurate latency measurements and identification of latency sources, thereby improving the performance and reliability of low latency applications.

At least one aspect of the technical solutions is directed to a system of periodic monitoring of network latency. The system can include a client device. The client device can include one or more processors coupled with memory. The client device can receive, from each node of a plurality of nodes between the client device and a device providing access to an internet service provider (ISP), a packet identifier and a timestamp for each data packet of a plurality of data packets selected by each node. The client device can identify, for each packet identifier received from a corresponding node, a second timestamp of receipt by the client device of each data packet corresponding to each packet identifier. The client device can determine, based at least on one or more timestamps associated with each of one or more packet identifiers received from the corresponding node and one or more second timestamps for the one or more packet identifiers, a respective latency between the client device and the corresponding node.

In some embodiments, the client device can identify one or more nodes of the plurality of nodes having the respective latency above a threshold. The packet identifier can include five-tuple information, a transmission control protocol (TCP) sequence number, and a node identifier identifying a node that generated the packet identifier. In some embodiments, each node of the plurality of nodes can be configured to randomly select each data packet of the plurality of data packets. In some embodiments, the client device can associate a corresponding second timestamp with the five-tuple information and the TCP sequence number of each data packet received by the client device and generate a record comprising the association of the second timestamp with the five-tuple information and the TCP sequence number. In some embodiments, the client device can maintain the record for a predefined duration. In some embodiments, the client device can identify, for each packet identifier received from the corresponding node, using the five-tuple information and the TCP sequence number, the second timestamp from the record. In some embodiments, the client device can determine, for the corresponding node, a difference between the second timestamp and the timestamp received from the corresponding node. In some embodiments, the client device can generate a notification in response to the respective latency being above a threshold. In some embodiments, the client device can generate aggregated latency data to provide an indication of network latency over time.

Another aspect of the technical solutions is directed to a system of periodic monitoring of network latency. The system can include a plurality of nodes between a client device and a device providing access to an internet service provider (ISP). Each node of the plurality of nodes can include one or more processors coupled with memory. Each node can select a data packet of a plurality of data packets. For the selected data packet, each node can generate a packet identifier and record a timestamp. Each node can transmit, to at least one of the client device or a second node of the plurality of nodes, for the selected data packet, the packet identifier and the timestamp to cause the at least one of the client device or the second node to determine, for a corresponding node, based at least on one or more timestamps associated with each of one or more packet identifiers received from the corresponding node and one or more second timestamps identified by the at least one of the client device or the second node for the one or more packet identifiers, a respective latency between the at least one of the client device or the second node and the corresponding node.

In some embodiments, each node can cause the at least one of the client device or the second node to determine, for each packet identifier received from the corresponding node, a difference between the second timestamp and the timestamp received from the corresponding node. In some embodiments, each node can be configured to randomly select the data packet of the plurality of data packets. In some embodiments, each node can transmit, to the at least one of the client device or the second node, for the randomly selected data packet, the packet identifier and the timestamp at one or more time intervals. The packet identifier can include five-tuple information, a transmission control protocol (TCP) sequence number, and a node identifier identifying a node that generated the packet identifier. In some embodiments, each node can synchronize the timestamp of the selected data packet with a precision time protocol (PTP).

Yet another aspect of the technical solutions is directed to a method of periodic monitoring of network latency. The method can include receiving, by a client device, from each node of a plurality of nodes between the client device and a device providing access to an internet service provider (ISP), a packet identifier and a timestamp for each data packet of a plurality of data packets selected by each node. The method can include identifying, by the client device, for each packet identifier received from a corresponding node, a second timestamp of receipt by the client device of each data packet corresponding to each packet identifier. The method can include determining, by the client device, based at least on one or more timestamps associated with each of one or more packet identifiers received from the corresponding node and one or more second timestamps for the one or more packet identifiers, a respective latency between the client device and the corresponding node.

In some embodiments, the method can include identifying, by the client device, one or more nodes of the plurality of nodes having the respective latency above a threshold. The packet identifier can include five-tuple information, a transport protocol identifier, and a node identifier identifying a node that generated the packet identifier. In some embodiments, the method can include associating, by the client device, a corresponding second timestamp with the five-tuple information and the transport protocol identifier of each data packet received by the client device and generating, by the client device, a record comprising the association of the second timestamp with the five-tuple information and the transport protocol identifier. In some embodiments, the method can include maintaining, by the client device, the record for a predefined duration. In some embodiments, the method can include identifying, by the client device, for each packet identifier received from the corresponding node, using the five-tuple information and the transport protocol identifier, the second timestamp from the record. In some embodiments, the method can include determining, by the client device, for the corresponding node, a difference between the second timestamp and the timestamp received from the corresponding node.

### BRIEF DESCRIPTION OF THE DRAWINGS

The foregoing and other objects, aspects, features, and advantages of the disclosure will become more apparent and better understood by referring to the following description taken in conjunction with the accompanying drawings, in which:
FIG. 1A illustrates a general schematic block diagram of a communication system, in accordance with one or more embodiments;
FIG. 1B illustrates a general schematic block diagram of a portion of the communication system illustrated in FIG. 1A, in accordance with one or more embodiments;
FIG. 1C illustrates a general schematic block diagram of applications in communication with cloud infrastructure for the communication system illustrated in FIG. 1A, in accordance with one or more embodiments;
FIG. 1D illustrates a general schematic block diagram of an application for a communication system illustrated in FIG. 1A, in accordance with one or more embodiments;
FIG. 1E illustrates a general schematic block diagram of an application for a communication system illustrated in FIG. 1A, in accordance with one or more embodiments;
FIG. 1F illustrates a schematic block diagram of the communication system illustrated in FIG. 1A, including a server configured for augmented reality/virtual reality, and/or metaverse applications, in accordance with one or more embodiments;
FIG. 2A illustrates a block diagram of embodiments of a computing device, in accordance with one or more embodiments;
FIG. 2B illustrates a block diagram depicting a computing environment comprising a client device in communication with cloud service providers, in accordance with one or more embodiments;
FIG. 3A illustrates a block diagram of an example system for periodic monitoring of network latency, in accordance with one or more embodiments;
FIG. 3B illustrates a block diagram of another example system for periodic monitoring of network latency, in accordance with one or more embodiments; and
FIG. 4 illustrates an example flow diagram of a method for periodic monitoring of network latency, in accordance with one or more embodiments.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: IEEE 802.11^{™}, IEEE 8002.14^{™}, IEEE P802.3^{™} and IEEE Ethernet standard systems including but not limited to LRM, VSR, SR, MR, LR, ZR and KR. Although this disclosure may reference aspects of these standard(s), the disclosure is in no way limited by these standard(s).

Devices provided by ISPs and customer-owned AR/VR setups, mobile phones, OTT devices, and cloud gaming clients are configured for low latency uses in some embodiments. Some embodiments of systems and methods disclosed herein provide a real time or near real time system to monitor end to end latencies. In some applications, timestamp synchronization with applications at intermediate nodes and end devices use precision time protocol (PTP) synchronization protocols for latency monitoring. In some embodiments, latency is monitored from end-to-end so that latency of all devices within the entire end-to-end process is considered, thereby enabling identification of the origins of substantial latency.

In some embodiments, the systems and methods achieve synchronization of a time reference across all nodes and end-user devices using a time synchronization protocol (e.g., precision time protocol (PTP)), and subsequently use timestamps for low latency data packets at each node to determine latency. The determination of latency at each node is made by applications at each node. The determination of latency is reported back to a server that communicates with the applications. The systems and methods allow the communication system to distinguish whether latency arises from the home network, an ISP, or cloud servers.

A latency application server extension is integrated into the ISP-provided modem or router in some embodiments. In some embodiments, the server extensions have the ability to filter and transmit all necessary information to the ISP's cloud server or share open data with application developers. The server extension can store or receive information about a customer's low latency plan subscription and can track low latency usages inside the home in some embodiments.

A server extension can refer to a software component or module that extends the functionality of a server application (e.g., a latency application) in some embodiments. Server extensions can be used in various server environments such as web servers, application servers, ISP servers, and database servers to enhance their capabilities or to add specific features tailored to the needs of users or applications and can be installed using extension files. The extensions can be installed on any of the devices discussed herein. In some embodiments, the extensions are provided on an ISP controlled server in the cloud, an ISP controlled modem or access point, a third party Wi-Fi access point, a third party modem, or ISP provided low latency devices.

In some embodiments, the server extension allows a user to select device applications for different latency treatment. A server within the residence can use classifiers and queues to reduce latency for low latency devices. The server can be part of a router, set top box, hub, etc. in some embodiments. The server extensions support multiparty involvement (e.g., cloud managers, ISPs, application developers and silicon vendors) for end to end usages in some embodiments.

With respect to latency, generally, latency refers to an amount of time a system, application or device takes to process and respond to a request in some embodiments. With respect to low latency, low latency refers to such amount of time being within a threshold, a performance level, a user experience level or requirements of the application or usage in some embodiments. The threshold, performance level, user experience level or requirements of the application may vary based on context, such as a type of application and/or use case and the systems, networks, and computer environment for which such use cases and/or application operate or execute. Low latency from a perspective of a computing environment refers to an ability of a computing system or network to provide responses without unacceptable or unsuitable delay, or otherwise minimal delay, for the context or use case of which such responses are provided. System criteria and application parameters can affect a threshold for low latency. The threshold can be fixed or variable (e.g., depending upon conditions or actual needs or requirements at a particular time). With respect to low latency networks and systems in a context of network and network communication, low latency describes a computer network, systems and environment that is designed, configured and/or implemented to support applications, network traffic and processing operations to reduce, improve latency or to meet a low latency threshold. End-to-end latency refers to latency between two points in a network or communication system. The two points can be a source of data and a consumer of data, or intermediate points therebetween in some embodiments.

A low latency device refers to any hardware, device component, or system that has low latency considerations or requirements in some embodiments. A low latency device can be, for instance, a telecommunications, remote control systems, gaming, audio processing, financial trading, augmented reality and/or virtual reality device where delays can impact user experience or system performance. There may be levels of low latency requirements where one low latency device has a more stringent requirement than another low latency device in some embodiments. A low latency path refers to a path for low latency operation in some embodiments. Latency data refers to any indication of latency associated with a communication or configuration data for low latency operation or control in some embodiments. A low latency application refers to the use or performance of a low latency operation in some embodiments. A low latency device or software program can be used to perform the low latency operation (such as video conferencing, cloud gaming, augmented reality/virtual reality (AR/VR) applications, and metaverse applications).

Some embodiments relate to a system including a first device and an application. The application operates on the first device and is configured to, for each received packet, generate a packet identifier and record a timestamp indicating the time the packet is received and another timestamp indicating the time the packet is sent. The application then aggregates multiple packet identifiers and their corresponding timestamps into a data structure and transmits this data structure to a second device.

In some embodiments, the application is configured to determine latency information associated with communication through the first device using the time stamps. The time stamps include a first time stamp for the first time and a second time stamp for the second time. In some embodiments, the application is configured to provide a second packet including the latency information and communicate the second packet to a server remote from the first device via a virtual communication link. In some embodiments, the first time stamp is an ingress time stamp and the second time stamp is an egress time stamp.

In some embodiments, the time stamps are provided as part of a precision time protocol. In some embodiments, the first packet is for use in a low latency operation. In some embodiments, the time stamps are derived from a satellite time source. In some embodiments, the latency information includes a history of time stamps. In some embodiments, the first device is a user device, cloud infrastructure, internet service provider infrastructure, a set top box, a cable modem, or a wireless router.

Some embodiments relate to a non-transitory computer readable medium having instructions stored thereon that, when executed by a processor, cause a processor to receive a first packet from a first node. The first packet includes latency information associated with a second packet provided to the first node for a low latency application. The instructions also cause the processor to provide a third packet to the first node or other nodes to increase priority for packets for the low latency application if the latency information indicates that a latency threshold for the low latency application has not been met. The first node can be part of a communication system including a cable, fiber optic, or wireless network. The other nodes and the first node are in path associated with the second packet provided to the first node for the low latency application.

In some embodiments, the processor is disposed on a server remote from the first node. In some embodiments, the server is in communication with internet service provider infrastructure and the third packet is provided to the internet service provider infrastructure. In some embodiments, the third packet is provided to internet service provider infrastructure, a set top box, a cable modem, or a wireless router.

In some embodiments, the instructions cause the processor to provide a fourth packet or data unit (e.g., network layer packets, cells, frames, etc., used in the transmission of data) to the first node or the other nodes to decrease priority for packets for the low latency application if the latency information indicates that the latency threshold for the low latency application has been met and additional bandwidth is available.

In some embodiments, the latency information comprises a user identification.

Some embodiments relate to a method of providing low latency service. The method includes providing a first time stamp for a first packet provided to a first device. The first packet can be for reception by a low latency device or as being for use in a low latency operation. The method also includes providing a second packet including latency information to a server remote from the first device via a virtual communication link.

In some embodiments, the method also includes providing a second time stamp for the first packet provided to the first device. In some embodiments, the first time stamp is an ingress time stamp and the second time stamp is an egress time stamp. In some embodiments, the first device includes an application configured to append the first time stamp to the first packet.

Some embodiments relate to a server. The server includes a first application configured to monitor end-to-end latency for a network. The network includes devices. The application is configured to receive latency information from at least one of the devices. The latency information includes time stamps or time period data for a packet to communicate across a device or a link. Monitoring or monitor refers to an action where performance is observed, checked, and/or recorded and can generally occur over a period of time.

A non-transitory computer readable medium has instructions stored thereon that, when executed by a processor, cause the processor to receive a first packet from a first node. The first packet includes latency information associated with a second packet provided to the first node for a low latency application. The instructions also cause the processor to provide a subscription offer in response to the latency information. The first node is part of a communication system comprising a cable, fiber optic, or wireless network. The other nodes and the first node are in paths associated with the second packet provided to the first node for the low latency application.

In some embodiments, the first device is a set top box, a cable modem, or a wireless router. A device can refer to any apparatus, system, or component for performing an operation in some embodiments. A low latency device can refer to any device capable of performing a low latency operation. A low latency operation refers to an operation where higher than low latency operation can affect performance level, user experience level, or a requirement of the application or use in some embodiments. A packet refers to a unit of data that is transmitted over a network in some embodiments, and includes cells, frames, and network layer packets, for instance. The packet can include a header and a payload. Time stamps and latency information can be appended to a packet in some embodiments. Classify or classifying may refer to any operation for determining a classification, grouping or arrangement in some embodiments. For example, a packet can be classified as being for a low latency device or application by reviewing an address, appended data, by its type of data, or other information in some embodiments. Bandwidth may refer to an amount of capacity for communication in some embodiments. Priority refers to a precedence, hierarchical order, level, or other classification in some embodiments. For example, packets can be ordered for transmission in accordance with a priority associated with a latency requirement in some embodiments. A cable, fiber optic, or wireless network refers to any network that uses one or more of a fiber optic cable, a coaxial cable, an ethernet cable, other wire, or wireless medium in some embodiments.

For purposes of reading the description of the various embodiments below, the following descriptions of the sections of the specification and their respective contents may be helpful:
- Section A describes a communication system that may be useful for practicing the embodiments described herein.
- Section B describes low latency applications that may be useful for practicing the embodiments described herein.
- Section C describes embodiments of network environments and computing environments that may be useful for practicing the embodiments described herein.
- Section D describes embodiments of systems and methods for periodic monitoring of network latency.

### A. Communication System

Network latency can significantly impact internet connectivity, user experience, and the performance of various online applications and services. Some embodiments provide information for ISPs to address end-to-end latency issues through network optimization, infrastructure upgrades, and efficient routing to ensure a reliable and responsive internet experience for their customers. In some embodiments, tools are provided so that cloud servers of ISPs can collect analytics data and can re-configure ISP provided devices like cable modems, GPON modems or set top boxes. In some embodiments, the systems and methods allow multiple parties (e.g., more than one ISP, cloud service providers, public switch operators, and application developers) to address low latency usages including but not limited to video conferencing, augmented reality (AR)/ virtual reality (VR), and metaverse end to end usage. In some embodiments, the systems and methods allow multiple parties to cooperate and work together to address latency issues. In some embodiments, the systems and methods can be used with Wi-Fi networks, Ethernet networks, modems, access network, backbone networks, IXPs, and cloud infrastructure and allow multiple teams to work together for latency optimizations across various mediums.

In some embodiments, a latency monitor measures and reports latency for each link, device, and end application. The reports are provided to controllers of the paths, such as, ISPs, application developers, end users, etc. so that actions can be taken once low latency requirements are not met. In some embodiments, systems and methods provide a seamless latency monitoring, analysis, and optimization. The analysis of latency measurements and reporting allows for identification of latency contributors in real time and optimization by mapping traffic requiring low latency traffic to low latency queues or paths. In some embodiments, devices in the path are provided with an application (e.g., software) for effecting monitoring, analysis, and optimization. The analysis of latency measurements and reporting allows for control of devices to appropriately provide low latency traffic to low latency queues or paths. The applications can be in communication with a latency server (e.g., a server for the applications) that coordinates operations and accumulates data according to the monitoring, analysis, and optimization operations. An application or app may refer to a software program or module configured to perform specific functions or tasks on an electronic device.

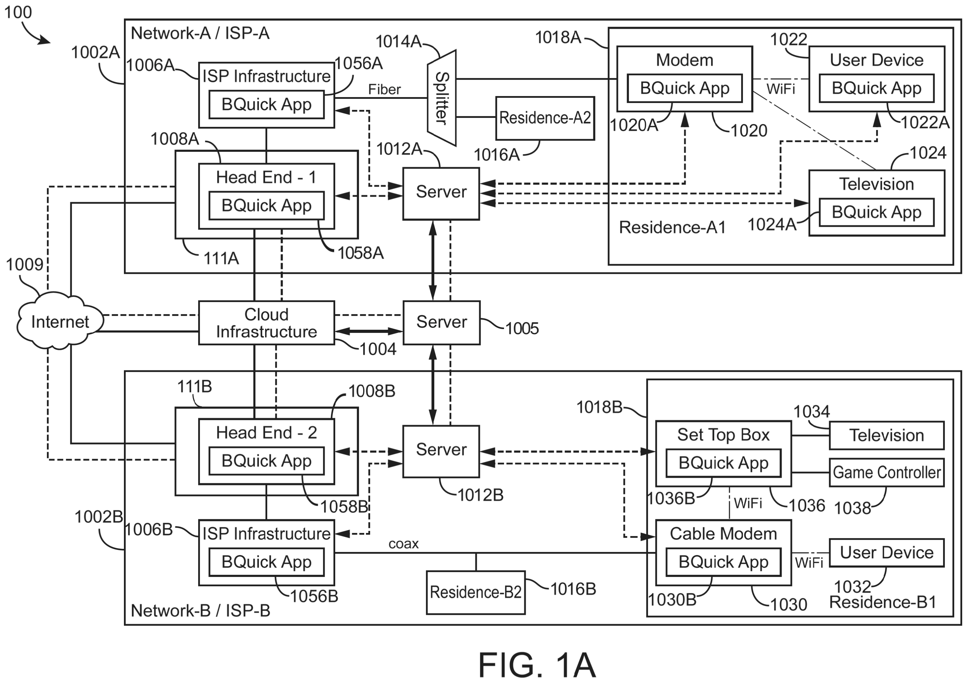

With reference to FIG. 1A, a communication system 100 includes a network 1002A for residences 1016A and 1018A, a network 1002B for residences 1016B and 1018B, a cloud infrastructure 1004, and a BQUICK_TOP server 1005. Communication system 100 advantageously is configured so that information is provided to ISPs to address latency issues through network optimization, infrastructure upgrades, service upgrades and/or efficient routing to ensure a reliable and responsive internet experience for customers can be achieved on networks 1002A and 1002B. BQUICK_TOP server 1005 is configured to receive the information and address latency issues in some embodiments. BQUICK_TOP server 1005 is in communication (e.g., via direct or virtual connections) with cloud infrastructure 1004 and networks 1002A and B (residences 1016A-B and 1018A-B) to share information, reports, commands, and other data in some embodiments. BQUICK_TOP server 1005, infrastructure 1004 and residences 1016A-B and 1018A-B can utilize any form of communication mediums, networks, protocols, etc. to communicate data and information.

Cloud infrastructure 1004 includes a collection of hardware, software, networking, and other resources that enable the delivery of cloud computing services over the internet in some embodiments. Cloud infrastructure 1004 includes physical servers, storage devices, networking equipment, and other hardware components hosted in data centers distributed across multiple geographic locations in some embodiments. The data centers are equipped with high-performance servers, storage arrays, and networking gear to support the computing needs of cloud services in some embodiments. The cloud infrastructure 1004 is configured to provide high-speed, redundant network links, routers, switches, and content delivery networks (CDNs) for delivery of low-latency, high-bandwidth content for users in some embodiments. Cloud infrastructure 1004 includes block storage (e.g., Amazon EBS, Azure Disk Storage), object storage (e.g., Amazon S3, Google Cloud Storage), and file storage (e.g., Amazon EFS, Azure Files) in some embodiments.

Residences 1016A and 1018A can include a network associated with a first ISP and residences 1016B and 1018B can include a network associated with the same ISP or a second ISP. In some embodiments, the networks for residences 1016A and 1018A and residences 1016B and 1018B are part of broadband access server (BAS) networks. Network 1002A includes infrastructure 1006A, a head end 1008A, a BQUICK ISP_A server 1012A, splitter 1014A, equipment for residence 1016A and equipment for residence 1018A. Equipment for residence 1018A includes an optical network unit (ONU) 1020, a user device 1022, and a television 1024. Modem or optical network unit 1020 can be a fiber optic router, switch, gateway, etc. and have Wi-Fi capabilities for a Wi-Fi network associated with residence 1018A in some embodiments. Optical network unit 1020 is a GPON modem or optical network terminal (ONT) in some embodiments. GPON is a technology that allows for high-speed internet access over fiber optic cables. Optical network unit 1020 converts the optical signals transmitted over the fiber optic cables into electrical signals and/or radio frequency signals that can be used by devices in residence 1018A. Although system 100 is shown communicating via coaxial cable and optical cable, ground based wireless communications and satellite communications can be utilized in system 100. Optical network unit 1020 is generally provided by an optical network operator (ISP-A) and can be referred to as an optical network termination. BQUICK_TOP server 1005 and BQUICK ISP_A server 1012A can be Broadcom Analytics System (BAS Servers) that collect analytics data from various devices like modems, set top boxes, and other devices.

User device 1022 is a smartphone, AR/VR device, tablet, laptop computer, smartwatch, exercise equipment, smart appliance, camera, headphone, automobile, other computing device, etc. Residence 1016A can have similar devices to residence 1018A. Television 1024 and user device 1022 communicate with optical network unit 1020 via a wireless network or wired connections. In some embodiments, optical network unit 1020 can include an Ethernet router including wired connections to user device 1022, wireless modems, and television 1024.

Head end 1008A includes routers, switches, servers, and/or other infrastructure for communicating between ISP infrastructure 1006A and cloud infrastructure 1004. ISP infrastructure 1006A includes routers, switches, servers, and/or other infrastructure for communicating between head end 1008A and splitter 1014A. Splitter 1014A communicates via fiber optic cables between infrastructure 1006A and residences 1016A and 1018A., BQUICK ISP_A 1012A BQUICK_TOP server 1005 communicates with server 1012, infrastructure 1006A, head end 1008A and residences 1016A and 1018A via direct or indirect communication (e.g., via the Internet).

Splitter 1014A is a fiber optic splitter in some embodiments. Splitter 1014A can be used in fiber optic networks to divide an incoming optical signal into multiple separate signals for residences 1016A and 1018A and unify signals into one or more signals for infrastructure 1006A. Splitter 1014A can be configured for a passive optical network (PON) architecture. Bidirectional communication occurs across splitter 1014A in some embodiments. In some embodiments, splitter 1014A is a conducting cable-type splitter (e.g., for a coaxial, not optical cable). Splitter 1014A includes repeaters, amplifiers, signal conditioners, etc. in some embodiments.

BQUICK ISP_A server 1012A is a computing device, such as a machine equipped with one or more processors, memory, and storage drives. BQUICK ISP_A server 1012A delivers assorted services to customers (e.g., residences 1016A and 1018A) for the ISP in some embodiments. BQUICK_TOP server 1005 is configured as a central hub responsible for managing and routing internet traffic for its subscribers. BQUICK ISP_A server 1012A handles requests from users such as accessing websites, sending emails, streaming content, and downloading files. BQUICK ISP_A server 1012A manages network protocols, assigns IP addresses, and facilitates communication between different devices on the internet. BQUICK ISP_A server 1012A includes operating systems like Linux or Windows Server, along with networking software such as routing protocols (e.g., BGP, OSPF), a DNS (Domain Name System) server, a dynamic host configuration protocol (DHCP) server for IP address allocation, and firewall/ security software to protect system 100 from cyber threats. BQUICK ISP_A server 1012A employs traffic shaping and quality of service (QoS) mechanisms to prioritize and optimize internet traffic, ensuring a smooth and consistent user experience for all subscribers. These operations can involve managing bandwidth allocation, prioritizing certain types of traffic (e.g., VoIP or video streaming), and mitigating network congestion during peak usage periods and can be performed in response to information from server 1012. BQUICK ISP_A server 1012A employs monitoring tools or applications to continuously analyze traffic data to detect anomalies, troubleshoot network issues, and ensure compliance with service level agreements (SLAs) and regulatory requirements in some embodiments.

BQUICK_TOP server 1005 is a computing device similar to and is configured to communicate with servers 1012A and 1012B. BQUICK_TOP server 1005 includes software advantageously configured to address latency issues through network optimization, infrastructure upgrades, and efficient routing to ensure a reliable and responsive internet experience for their customers in some embodiments. BQUICK_TOP server 1005 can receive logs of network activity, including but not limited to traffic patterns, usage statistics, and security events from servers 1012A and 1012B in some embodiments. BQUICK_TOP server 1005 employs monitoring tools to continuously analyze traffic data to detect anomalies, troubleshoot network issues, and ensure compliance with service level agreements (SLAs) and regulatory requirements in some embodiments. In some embodiments, BQUICK_TOP server 1005 is a platform configured to perform latency monitoring in real time, latency analysis in real time, and latency optimization in real time. In some embodiments, the latency optimization is performed to provide a report indicating latency issues. BQUICK_TOP server 1005 can configure paths in networks 1002A and 1002B and controls devices in networks 1002A and 1002B so that low latency requirements are met in some embodiments.

BQUICK_TOP server 1005 and BQUICK ISP_B server 1012B are similar to BQUICK ISP_A server 1012A and can be configured to operate with residences 1016B and 1018B. Residences 1016A, 1018A, 1016B and 1018B are similar to each other and can include similar devices. Residence 1018B includes a cable modem 1030B, a set top box 1036B, a game controller 1038, a television 1034 and a user device 1032. User device 1032 is similar to user device 1022. Head end 1008B is similar to head end 1008A, and ISP infrastructure 106B is similar to ISP infrastructure 1006A. Televisions 1024 and 1034 are monitors, smart televisions, or other audio/video equipment. Networks 1002A and 1002B can include cameras, security equipment, fire and safety equipment, smart appliances, etc. in communication with infrastructure 1006A and 106B in some embodiments. ISP infrastructure 1006A and 106B can each include fiber optic cable, coaxial cable, remote nodes, splitters, and other equipment for cable customers in some embodiments. The equipment can include amplifiers, remote physical devices or layers and remote media access control devices or layers. Intermediate nodes in ISP infrastructure 1006A and 106B can process data packets and monitor latency and traffic at various points in network. BQUICK_TOP server 1005, BQUICK ISP_B server 1012B, BQUICK_ISP_A server 1012A are controlled by ISPs (e.g., respective ISPs) in some embodiments.

ISP infrastructure 106B is coupled to residences 1016B and 1018B via a coaxial cable in some embodiments. Cable modem 1030B is a device configured to connect devices in residence 1018B to the ISP infrastructure 106B. Cable modem 1030 includes a computer, router, gateway, or other communication device in some embodiments. Modem 1030 can be configured to provide a wireless network for communicating with devices in residence 1018B. Repeaters, amplifiers, signal conditioners, etc. can be provided on the cable associated with modem 1030 in some embodiments. Cable modem refers to any device for communicating across a cable in some embodiments. Optical network unit 1020 and modem 1030 provide data connection to the ISPs data pipe over fiber or cable. All devices inside the home can be connected to the modem over Wi-Fi or Ethernet, for instance, for internet connectivity. Each node (e.g., routers, repeaters, modems, Wi-Fi access points) inside the home can introduce latency. ONU 1020 and modem 1030 can be any device at a home or business that connects networking devices to ISPs via an internet data pipe over coaxial cable, fiber optic cable, digital subscriber line (DSL), or cell connection (e.g., via a tower (e.g., 5G, LTE modem)) in some embodiments.

Set top box 1036 is configured to receive and decode digital television, movie, streaming, or other video signals for viewing on television 1034. Set top box 1036 can be configured for gaming operations and can communicate with a game controller 1038. Set top box 1036 can also be configured to provide internet access, shopping services, home automation, audio features, screen mirroring, etc. Set top box 1036 includes one or more processors, memory, dedicated graphics processing units (GPUs), and/or storage capacity for storing games, applications (apps), latency data, and recorded content in some embodiments. Set top box refers to any device that connects to a television set or monitor and allows users to receive and decode video signals. A set top box can serve as an interface between a television set and various broadcast media sources, such as cable, satellite, or internet-based streaming services in some embodiments. A dashed line in the drawings can represent a virtual connection and a solid line can represent a physical connection (e.g., wires or fiber optic cable).

The cloud infrastructure 1004, head end 1008A, and head end 1008B are in communication with the internet 1009 virtually or directly. Head end 1008A and head end 1008B can be associated with buildings 111A and 111B, respectively. Communication system 100 is generally an end to end combination of networking elements used for networking traffic from a home or business to internet 1009 (e.g., public internet) in some embodiments. In some embodiments, cloud infrastructure 1004 is a set multiple servers, switches, storage units. ISPs can have a pool of data centers/cloud servers co-located with head ends 1008A and 1008B or dedicated links to cloud infrastructure 1004 from head ends 1008A and 1008B and head end connections to the internet 1009.

Although cloud infrastructure 1004 is shown as single block, cloud servers, data servers can be collocated with ISP head ends 1008A and/or 1008B. The cloud servers can be at third party private facility and ISPs can have dedicated physical links or links via internet 1009. Depending on congestion and server processing capabilities, cloud infrastructure 1004 can be a source of latency. Cloud server processing elements can be upgraded to support latency monitor applications (e.g., BQUICK applications) or can configure devices to support low latency services in some embodiments. Head ends 1008A and 1008B can be a central facility (e.g., a central office. A head end refers to a facility where internet data or audio/video content is received, processed, and routed to end subscribers like residential or business owners in some embodiments. Head ends 1008A and 1008B can have multiple switching, routing, data metering, queuing, security elements, and/or other devices which can introduce the latencies. Head ends 1008A and 1008B can also host Cable Modem Termination Systems (CMTS) in a cable network, DSLAM (Digital Subscriber Line Access Multiplexor) in a DSL network, and OLT (Optical Line Terminal) in a fiber network.

Networks 1002A and 1002B are operated by ISP-A and ISP-B. ISPs extend their services to various residences or businesses within communities, cities, or specific regions. Networks 1002A and 1002B represent two distinct networks served by the same or different ISPs, which may be situated in the same neighborhood or entirely in different regions or countries. Homeowners or business proprietors seek out ISPs offering services in their local areas and subscribe to internet service accordingly.

### B. Applications

System 100 advantageously includes an ISP infrastructure BQUICK application 1056A for ISP infrastructure 1006A, a head end BQUICK application 1058A for head end 1008A, a modem BQUICK application 1020A for optical network unit 1020, a user device BQUICK application 1022A for user device 1022, and a television BQUICK application 1024A for television 1024. Applications 1056A, 1058A, 1020A, 1022A, and 1024A can be software apps or programs designed to perform specific tasks or provide particular functions as described herein (e.g., latency monitoring, latency analysis, and latency optimization and the communication and storage of data related thereto). Applications 1056A, 1058A, 1020A, 1022A, and 1024A can be provided on any electronic devices in communications system 100 including but not limited to servers, computers, smartphones, tablets, smart devices, appliances, cameras, security devices, vehicles, user devices, and other digital platforms. In some embodiments, applications 1056A, 1058A, 1020A, 1022A, and 1024A can be executed on Windows, macOS, iOS, Android, or other operating systems or can be web-based and accessible through internet browsers. In some embodiments, applications 1056A, 1058A, 1020A, 1022A, and 1024A can be cross-platform with an ability to be executed on multiple OS environments. Applications 1056A, 1058A, 1020A, 1022A, and 1024A can be installed from various sources such as app stores, software repositories, or directly from ISP's website. In some embodiments, applications 1056A, 1058A, 1020A, 1022A, and 1024A are configured to communicate with BQUICK_TOP server 1005 via a virtual connection. In some embodiments, applications 1056A, 1058A, 1020A, 1022A, and 1024A are configured to communicate with BQUICK_TOP server 1005 via BQUICK ISP_A server 1012A. Applications 1056A, 1058A, 1020A, 1022A, and 1024A can be updated through app stores or via automatic updates depending on device settings.

BQUICK applications 1056A, 1058A, 1020A, 1022A, and 1024A are configured to facilitate integration and communication with other services or platforms, sharing of data, collaboration, and/or access to additional functionalities seamlessly. Applications 1056A, 1058A, 1020A, 1022A, and 1024A allow optical network unit 1020, television 1024 and user device 1022 to monitor latency, store subscription information (e.g., classic bandwidth in Megabits per second (MPPS), monitor low latency bandwidth (MBPS), max jitter in milliseconds), and provide options for upgrading internet service. The latency information and subscription information can be tracked according to device, device type, user identification, application, residence identification, etc. in some embodiments. The latency information can be provided in a packet with a time stamp to BQUICK_TOP server 1005 in some embodiments. A user interface can be provided by applications 1056A, 1058A, 1020A, 1022A, and 1024A on optical network unit 1020, television 1024 and user device 1022 to upgrade or downgrade to a different level of service in light of latency information. The different level of service can be provided to latency server 150 and BQUICK_TOP server 1005, BQUICK ISP_A BQUICK server 1012A, or BQUICK ISP_B BQUICK server 1012B in some embodiments.

System 100 advantageously includes an ISP infrastructure BQUICK application 1056B for ISP infrastructure 106B, a head end BQUICK application 1058B associated with head end 1008B, a modem BQUICK application 1030B for modem 1030, and a set top box BQUICK application 1036B for set top box. Applications 1056B, 1058B, 1030B, and 1036B are similar to applications 1056A, 1058A, 1020A, 1022A, and 1024A. In some embodiments, when applications 1030B, 1036B, 1056A, 1056B, 1058B, 1058A, 1020A, 1022A, and 1024A are installed or associated devices join the network, the applications 1030B, 1036B, 1056A, 1056B, 1058B, 1058A, 1020A, 1022A, and 1024A register at server 1012 as being compliant for operations described herein. User device 1032, television 1034, and game controller 1038 can also include an application similar to BQUICK applications 1022A and 1024A.

In some embodiments, BQUICK applications 1030B, 1036B, 1056A, 1056B, 1058B, 1058A, 1020A, 1022A, and 1024A are latency applications and are configured to communicate data so that a topology report can be provided. The topology report identifies devices/networks from end-to-end. Latency requirements of each device is provided in the report (e.g., on a device by device, type of usage by type of usage, user ID by user ID, or application by application basis) in some embodiments. The report can be stored at server 1012 in some embodiments. The latency requirements across the topology can be used to shape traffic, prioritize flow, etc. In some embodiments, the report tracks which devices are offline so that bandwidth reserved for those devices can be used for another device in some embodiments. In some embodiments, the report tracks whether the device is not running a low latency (e.g., BQUICK) application and yet is online so that bandwidth reserved for that device can be used for other devices in some embodiments. Offline refers to a state where a device, system, or application is not actively communicating with other devices or accessing online resources in some embodiments. A device that is off or asleep is offline in some embodiments. A low latency application can be offline when the low latency application is not running in some embodiments.

In some embodiments, the low latency packets are marked so that applications 1030B, and 1036B, 1056A, 1056B, 1058B, 1058A, 1020A, 1022A, and 1024A can process the packets and flow as a low latency flow. In some embodiments, the end device (e.g., application 1024A) can send a command or request indicating that latency requirements are not being met and each application in the path (applications 1020A 1056A, and 1058A) can respond to that command to process the packets for that device at a higher priority or remove traffic from that path in some embodiments. Latency issues can be sourced from an AP, a mesh, a device, or a node. Tracking bit rates or latencies at each location allow solutions to be directed to the particular location of the latency issue.

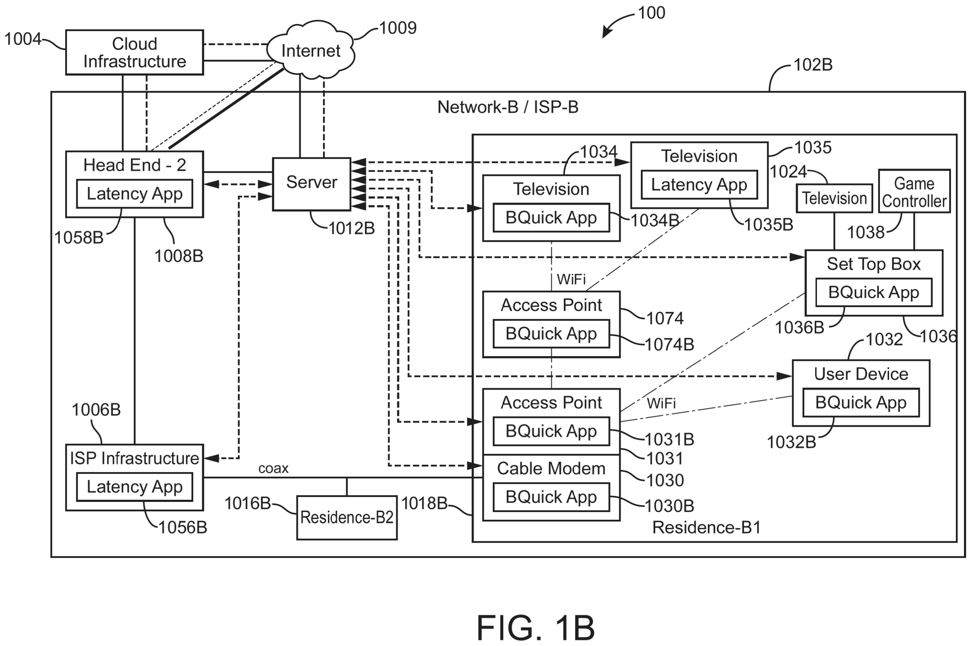

With reference to FIG. 1B, residence 1018B can include an access point 1031 in communication with modem 1030, a wireless router 1074 in communication with television 1034, a television 1035, set top box 1036, and user device 1032. Access point 1031 can be integrated with modem 1030 or can be a separate unit. User device 1032 includes a user device BQUICK application 1032B, and access point 1031 includes a latency access point application 1031B. Router 1074 includes a wireless router BQUICK application 1074B, television 1034 includes a television BQUICK application 1034B, and television 1035 includes a television BQUICK application 1035B. BQUICK_TOP server 1005, BQUICK_ ISP_A server 1012A, and BQUICK_ ISP_B server 1012B are in virtual communication with applications 1030B, 1031B, 1036B, 1074B 1032B, 1034B, 1035B, 1056B, and 1058B in some embodiments. A server refers to any computing device that provides services or resources to other computers or clients within a network in some embodiments.

Applications 1030B, 1031B, 1036B, 1074B, 1032B, 1034B, 1035B, 1056B, and 1058B are similar to applications 1056A, 1058A, 1020A, 1022A, and 1024A. Applications 1030B, 1031B, 1036B, 1074B, 1032B, 1034B, 1035B, 1056B, and 1058B allow modem 1030, televisions 1034 and 1035, access point 1031, router 1074, set top box 1036, and user device 1032 as well as other cable modem termination systems to monitor latency, store subscription information (e.g., classic bandwidth in Megabits per second (MPPS), low latency bandwidth (MBPS), max jitter in milliseconds), and provide options for upgrading internet service. A user interface can be provided on optical network unit 1020, television 1024 and user device 1022 to upgrade or downgrade to a different level of service in light of latency information. This ability is available even if the devices are third party devices in some embodiments. In some embodiments, application 1031B or 1074B can be configured to update network topology information to BQUICK TOP server 1012, and applications 1030B, 1031B, 1036B, 1074B, 1032B, 1034B, 1035B, 1056B, and 1058B can monitor low latency resources, request services, register devices, and request different latency treatment (e.g., for video, audio, commands, downloads, etc.). In some embodiments, devices or nodes associated with applications 1030B, 1031B, 1036B, 1074B 1032B, 1034B, 1035B, 1056B, and 1058B can include algorithms for changing packet priority with time and latency requirements. Applications 1030B, 1031B, 1036B, 1074B, 1032B, 1034B, 1035B, 1056B, and 1058B can communicate using virtual or logical connections (e.g., using internet 1009).

Access point 1031 is a networking device that allows Wi-Fi-enabled devices to connect to a wired network. Access point 1031 serves as a bridge between wireless devices, such as wireless router 1074, set top box 1036, user device 1032, televisions 1034 and 1035, and the wired network infrastructure, such as, modem 1030, routers, switches, and servers, in some embodiments. Wireless router 1074 can be a networking device that provides a wireless access point for a wireless network. Wireless router 1074 serves as a hub for a wireless local area network (LAN), allowing multiple devices in or around residence 1018B to connect to the internet and communicate with each other. Wireless router 1074 can include wirelessly built-in Ethernet switches which provide multiple ports for connecting wired devices. A wired connection can connect router 1074 to access point 1031 or modem 1030 in some embodiments. Wireless router refers to any device that provides a wireless access point for a wireless network in some embodiments.

With reference to FIGS. 1B-1C, applications 1030B and 1032B are in communication with BQUICK_TOP server 1005 via a logical interface. The architecture of applications 1030B and 1032B can be used in any of applications 1031B, 1036B, 1074B 1034B, 1035B, 1056B, 1058B, 1056A, 1058A, 1020A, 1022A, and 1024A. The logical interface is a virtual interface that represents a specific network configuration or functionality within a networking device, such as modem 1030 or user device 1032. The logical interface is software defined and can be created, configured, and managed within the device's operating system in some embodiments. Applications 1030B and 1032B can be provided with modems, routers, access points, mesh devices, set top boxes, AR/VR devices, game consoles, phones, over the top devices (OTTs), etc. Applications 1030B, 1032B, and cloud infrastructure 1004 can communicate using app to app communication. App to app communication is an exchange of data, messages, or commands between two or more software applications running on the same device or different devices over a network in some embodiments. App to app communication enables integration and collaboration between different apps, allowing them to share information, trigger actions, or synchronize state without requiring user intervention in some embodiments. BQUICK _TOP server 1012 can include an application for monitoring and/or determining end to end latency.

In some embodiments, applications 1020A, 1024A, 1032B, 1034B, 1035B, 1036B, and 1032B are client level applications. Applications 1036B can be configured for highest priority (e.g., lowest latency applications) while ordinary streaming latencies are associated with applications 1020A, 1024A, 1032B, 1034B, 1035B, 1032B. Applications 137A and 1031B are node level application and can be configured to provide or assign priority for applications 1020A, 1024A, 1032B, 1034B, 1035B, 1036B, and 1032B (client level applications) and associated devices. Application 1030B can be configured to provide or assign priority between application 1036B, applications 137A and 1031B (e.g., node level applications), and applications 1020A, 1024A, 1032B, 1034B, 1035B, and 1032B (e.g., client level applications) as well as their associated devices. Cloud level applications can include applications 1056B and 1058B in some embodiments. In some embodiments, the partitioning of applications 1056B, 1058B, 1020A, 1024A, 1030B, 1032B, 1034B, 1035B, 1036B, 137A, and 1032B allows for segregation of local and cloud processing, reduction in cloud server communication and ISP bandwidth, local data storage and security, availability of local resources (including edge processing and filtering of information), and faster response to low latency devices. In some embodiments, application 1030B has a server extension and handles communication between server 1012 and applications 1020A, 1024A, 1032B, 1034B, 1035B, 1036B, and 1032B.

When application 1030B includes the server extension, application 1030B can be a client level application or a cloud level application and maintain a virtual connection to server 1012 in some embodiments. The server extensions can provide advantages of decoupling development from ISPs which can be helpful for standardization, of having a direct data path from application 1020A or 1031B to app developer servers, of maintaining local data privacy, of availability of local resources (e.g., local machine learning (ML), edge processing and filtering information), and of faster response to local low latency gadgets or devices in some embodiments.

In some embodiments, applications 1056B, 1058B, 1020A, 1024A, 1030B, 1032B, 1034B, 1035B, 1036B, 137A, and 1032B can achieve synchronization of the time reference across all nodes and end user devices. Applications 1056B, 1058B, 1020A, 1024A, 1030B, 1032B, 1034B, 1035B, 1036B, 137A, and 1032B utilize timestamps for low-latency data packets at each node. This enhancement enables the determination of latency at each node and reporting to server 1012 in some embodiments. By utilizing a precision time protocol (PTP), applications 1056B, 1058B, 1020A, 1024A, 1030B, 1032B, 1034B, 1035B, 1036B, 137A, and 1032B can distinguish whether latency arises from the home network, an ISP, or cloud servers using time stamps in some embodiments. Each device can have an associated PTP clock that communicates with the application associated with the device. The latency per node can be shared across networks so that networks can avoid devices having latency issues or can perform other operations to reduce latency at that node (e.g., divert higher latency traffic away from the node having issues). The PTP clock can be derived form a satellite clock in some embodiments.

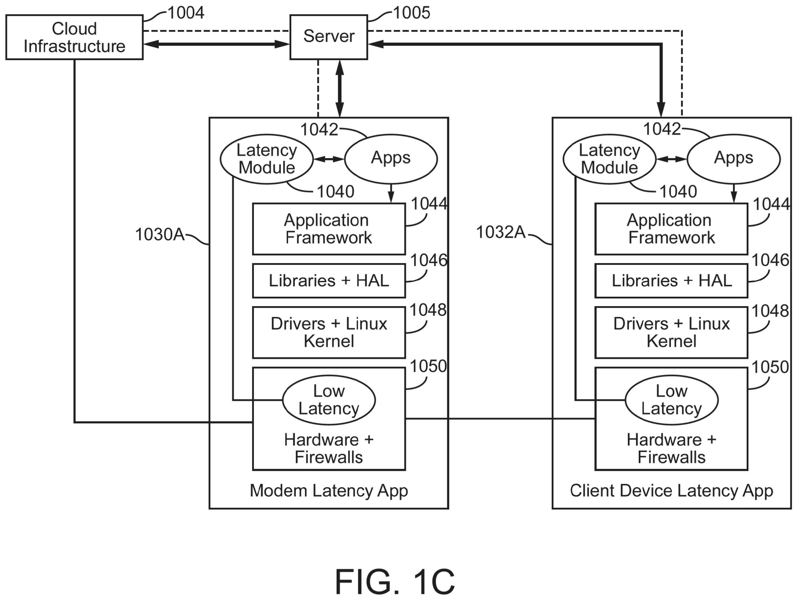

With reference to FIG. 1C, applications 1030B and 1032B each include a latency module 1040, applications 1042, an application framework 1044, libraries and hardware abstraction layer 1046, drivers and Linux kernel 1048, and hardware and firewalls 1050. In some embodiments, latency module 1040 is configured to control and monitor hardware and firewalls based upon latency. Latency module or BQUICK module 1040 is software configured to provide the low latency operations described herein. Applications 1042 are apps for performing various operations and can include third party apps (e.g., android package kit (APK)). Application framework 1044 is a structured set of software components that provide the necessary infrastructure for building and running applications.

Libraries and hardware abstraction layer 1046 provides standardized interfaces for device drivers to interact with hardware components. Libraries and hardware abstraction layer 1046 allows applications and system services to access hardware functionalities in a consistent manner across different devices. Libraries and hardware abstraction layer 1046 provide collections of pre-written code that developers can use to perform common tasks or implement specific functionalities and generally contain reusable functions, classes, or modules that provide specific capabilities.

Drivers and Linux kernel 1048 serves as the bridge between the hardware and the software layers of the system, managing system resources in some embodiments. Drivers and Linux kernel 1048 provide essential services and facilitate communication between software processes and hardware devices in some embodiments. Drivers and Linux kernel 1048 includes software components that facilitate communication between the operating system (OS) and hardware devices in some embodiments.

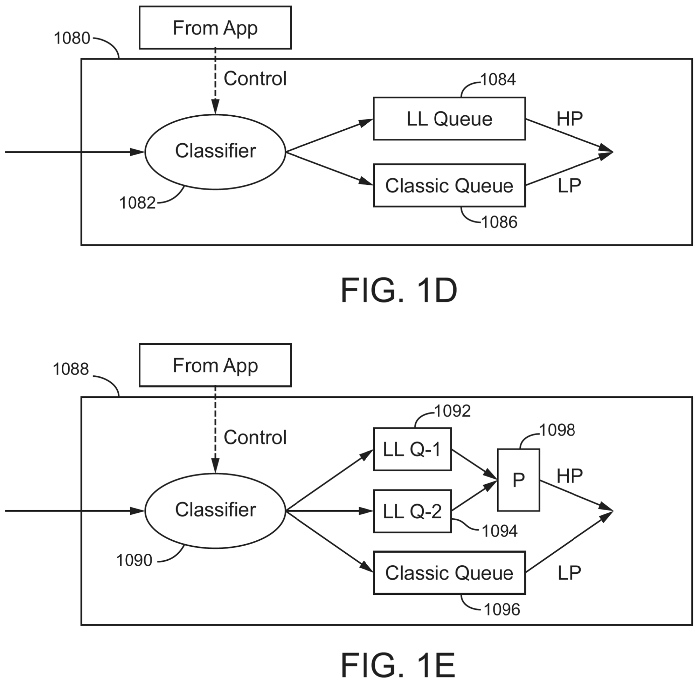

With reference to FIG. 1D, a function, service, process, or operation 1080 can be controlled by any of applications 1030B, 1031B, 1036B, 1074B, 1032B, 1034B, 1035B, 1056B, 1058B, 1056A, 1058A, 1020A, 1022A, and 1024A (FIGS. 1A and 1B). Operation 1080 use a classifier 1082, a low latency queue 1084, and a classic queue 1086. Queues 1084 and 1086 are memory or logical constructs (e.g., implemented using data structures) used to manage the flow of packets or messages within a network device or system 100 (FIG. 1A). Queue 1084 is associated with a high performance path, and queue 1086 is associated with a low performance path in some embodiments. A queue refers to any structure for storing information (e.g., packets) in some embodiments. Any networking device can have separate queue to support low latency traffic and operation can be performed any device in communication system 100 (FIG. 1A). Applications 1030B, 1031B, 1036B, 1074B, 1032B, 1034B, 1035B, 1056B, 1058B, 1056A, 1058A, 1020A, 1022A, and 1024A can report latency for each queue independently.

Queues 1084 and 1086 are configured as first-in-first-out (FIFO) buffers that temporarily hold packets or messages before messages are transmitted or processed in some embodiments. Queue 1084 can store messages for the high performance path (e.g., low latency path), and queue 1086 can store messages for the low performance path (e.g., high latency path) in some embodiments. In some embodiments, a low latency operations may use a low performance path, and a high latency operations may use the high performance path, or each uses the same path. A path refers to any communication route or channel through which data or information travels from a source to a destination (e.g., through devices and across mediums) in some embodiments. A path can include intermediate components and links involved in transmitting data between two or more points in one or more networks in some embodiments. A low latency path refers to a path for low latency traffic in some embodiments.

Classifier 1082 is processor and/or software configured to categorize or classify network traffic based on certain criteria (e.g., by latency requirements and/or priority). Classifier 1082 is configured to enforce network policies, prioritize traffic (e.g., for the high performance or low performance path), and/or apply specific actions based on the classification results in some embodiments. Classifier 1082 is used to differentiate between different classes of traffic (e.g., voice, video, data) and apply QoS policies to ensure that critical applications receive adequate bandwidth and latency requirements. Classifier 1082 prioritizes traffic based on predefined criteria, ensuring that important or time-sensitive applications receive preferential treatment over less critical traffic by appropriately providing traffic to queue 1084 and queue 1086. Classifier 1082 can utilize information about customer subscriptions (e.g., device level, user level, residence level) to classify traffic in some embodiments.

With reference to FIG. 1E, an operation 1088 can be controlled by any of applications 1030B, 1031B, 1036B, 1074B, 1032B, 1034B, 1035B, 1056B, 1058B, 1056A, 1058A, 1020A, 1022A, and 1024A. Operation 1088 is similar to operation 1080 and utilizes a classifier 1090, a first low latency queue 1092, a second low latency queue 1094, a classic queue 1096, and a priority queue 1098. Queues 1092, 1094, 1096 and 1098 are memory or data structures used to manage the flow of packets or messages within a network device or system 100 (Fig. 1A). Queues 1092 and 1094 are associated with a high performance path, and queue 1096 is associated with a low performance path in some embodiments. Queue 1098 receives messages from queues 1092 and 1094 and provides messages or data to the high performance path based upon a priority scheme associated with queues 1092 and 1094 in some embodiments. Classifier 1090 is similar to classifier 1082 and is configured to categorize or classifying network traffic based on certain criteria (e.g., by latency requirements) for queues 1092, 1094, and 1096 in some embodiments. In some embodiments, classifiers 1082 and 1090 are software modules operating on a device (e.g., server, ISP supplied device, user device, etc.). In some embodiments, queues 1084, 1086, 1092, 1094, 1096 and 1098 are virtual queues provided on the memory of the device configured by operation 1080 or 1088. In some embodiments, queues 1084, 1086, 1092, 1094, 1096 and 1098 are dedicated hardware queues (e.g., FIFO memories) on the device. Classifiers 1090 and 1082 and queues 1084, 1086, 1092, 1094, 1096 and 1098 are implemented in an application layer of the device and may utilize services and structures provided by the media access layer and the physical layer in some embodiments. Classifiers 1082 and 1090 can be configured by commands provided by BQUICK TOP server 1012 to appropriately classify low latency traffic in some embodiments.

In some embodiments, applications 1080 and 1088 are configured to operate at nodes associated with devices including but not limited to ONU 1020, modem 1030, set top box 1036, television 1024, access point 1031, user device 1032, and/or router 1074. Applications 1080 and 1088 are configured to control and/or partition subscribed low latency bandwidth traffic (e.g., 20 Mbps vs 50 Mbps), track latency statistics (e.g., minimum, maximum, average latencies for low latency flows), process five tuples (e.g., source IP address, source port, destination IP address, destination port, transport protocol) for X number of flows (where X is any integer) with latency and/or bandwidth requirements, monitor latency introduced by a node, provide timestamps at ingress and egress ports, monitor buffer depths, perform boundary clock precision protocol (e.g., IEEE 10588-2008 standard and extensions thereof), and prioritize traffic among multiple low latency clients. Monitored and measured information can be appended to packets for provision to other nodes and servers (e.g., server 1012). For example, time stamps can be applied to packets at each node or device. Latency can be determined by comparing time stamps. Applications 1080 and 1088 are also configured to track status of low latency applications and provide a user interface for controlling low latency configurations in some embodiments. Classifiers 1082 and 1090 and/or queues 1084, 1086, 1092, 1094, 1096 are configured by applications 1030B, 1031B, 1036B, 1074B, 1032B, 1034B, 1035B, 1056B, 1058B, 1056A, 1058A, 1020A, 1022A, and 1024A (e.g., at each respective node) in some embodiments. In some embodiments, servers 1012, 1012A, and 1012B configure classifiers 1082 and 1090 and/or queues 1084, 1086, 1092, 1094, 1096 via virtual connections.

Applications 1080 and 1088 can identify end to end bandwidth available for low latency applications, provide a user real time feedback of monitored latency, and adjust latency responses. The adjustment may be in response to purchased services or bandwidth upgrades in some embodiments. In some embodiments, applications 1080 and 1088 can be configured to provide an advertisement or customer offer for low latency resources. Applications 1080 and 1088 can address variable latency for each user and adjust responses to the latency level at a particular time, for a particular time period, etc. Latency information can be communicated to servers 1012A, 1012B, and 1012 and applications 1030B, 1031B, 1036B, 1074B, 1032B, 1034B, 1035B, 1056B, 1058B, 1056A, 1058A, 1020A, 1022A, and 1024A as timestamps appended to packets as described herein, or to a packet identifier (e.g., 5 tuples and sequence number) in some embodiments. The time stamp information can be sent to servers 1012A, 1012B, and/or 1012 via an independent virtual/logical channel in some embodiments.

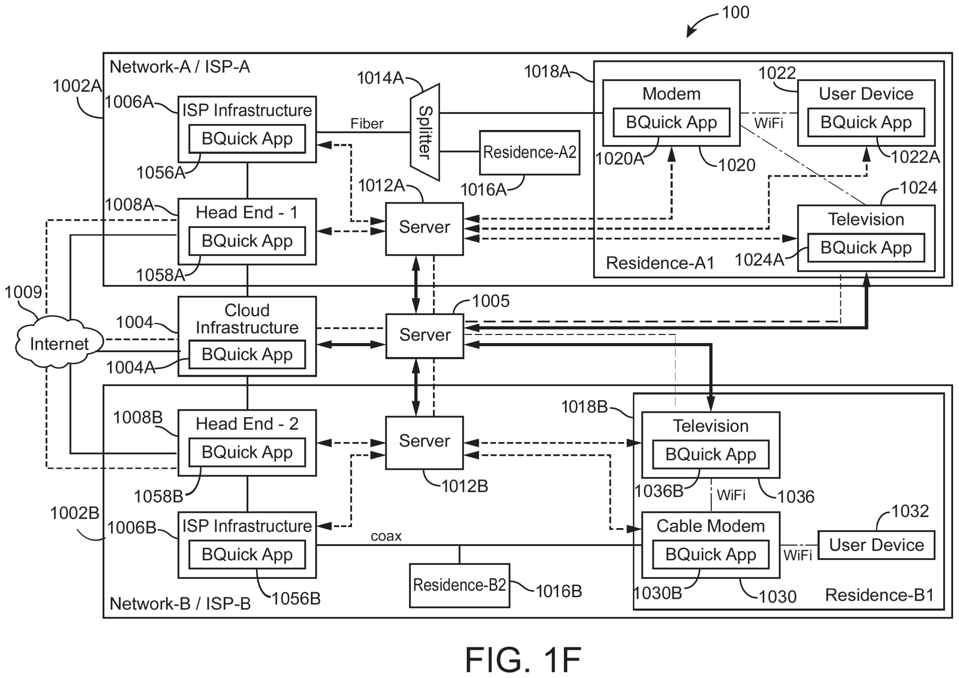

With reference to FIG. 1F, cloud infrastructure 1004 can include an application 1004A. Application 1004A is similar to applications 1030B, 1031B, 1036B, 1074B 1032B, 1034B, 1035B, 1056B, and 1058B. BQUICK TOP server 1012 can be configured to monitor AR/VR applications and/or metaverse applications. An application executed on BQUICK TOP server 1012 can perform the monitoring functions. Application 1004A is in communication with BQUICK TOP server 1012. Servers 1012A and 1012B can include an application similar to application 1004A.

Using applications 1020A, 1024A, 1030B, 1032B, 1034B, 1035B, 1036B, 137A, and 1032B, the devices given by ISPs, customer-owned AR/VR setups, mobile phones, over the top (OTT) devices, and cloud gaming clients are capable of facilitating low latency uses. Applications, 1020A, 1024A, 1030B, 1032B, 1034B, 1035B, 1036B, 137A, and 1032B allow devices in residences 1018A and 1018B to interact with the server extension integrated in the ONU 1020 and modems 1030 or routers (e.g., ISP provided). Additionally, the server extensions have the ability to filter and transmit all necessary information to servers 1012A and 1012B or share open data with application developers.

### C. Computing Environment

Prior to discussing the specifics of embodiments of the systems and methods of the present solution, it may be helpful to discuss the computing environments in which such embodiments may be deployed.

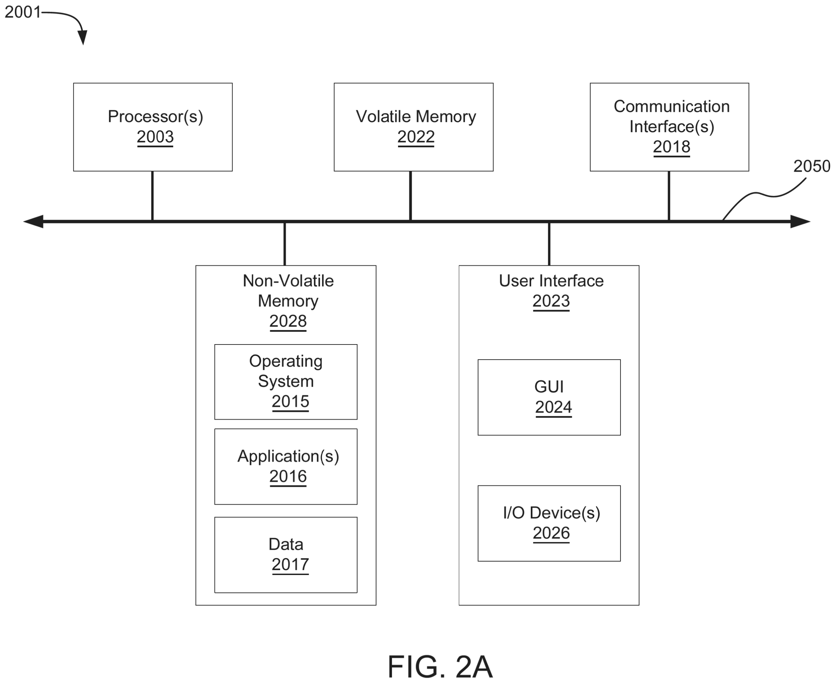

As shown in FIG. 2A, computer 2001 may include one or more processors 2003, volatile memory 2022 (e.g., random access memory (RAM)), non-volatile memory 2028 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 2023, one or more communications interfaces 2018, and communication bus 2050. User interface 2023 may include graphical user interface (GUI) 2024 (e.g., a touchscreen, a display, etc.) and one or more input/output (I/O) devices 2026 (e.g., a mouse, a keyboard, a microphone, one or more speakers, one or more cameras, one or more biometric scanners, one or more environmental sensors, one or more accelerometers, a remote control, a video game controller, or joystick, etc.). Non-volatile memory 2028 stores operating system 2015, one or more applications 2016, and data 2017 such that, for example, computer instructions of operating system 2015 and/or applications 2016 are executed by processor(s) 2003 out of volatile memory 2022. In some embodiments, volatile memory 2022 may include one or more types of RAM and/or a cache memory that may offer a faster response time than a main memory. Data may be entered using an input device of GUI 2024 or received from I/O device(s) 2026. Various elements of computer 2001 may communicate via one or more communication buses, shown as communication bus 2050.

Computer 2001, as shown in FIG. 2A, is shown merely as an example. Clients, servers, intermediary devices, and other networking devices may be implemented by any computing or processing environment and with any type of machine or set of machines that may have suitable hardware and/or software capable of operating, as described herein. Processor(s) 2003 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A "processor" may perform the function, operation, or sequence of operations using digital values and/or using analog signals. In some embodiments, the "processor" can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors. A processor including multiple processor cores and/or multiple processors multiple processors may provide functionality for parallel, simultaneous execution of instructions or for parallel, simultaneous execution of one instruction on more than one piece of data.

Communications interfaces 2018 may include one or more interfaces to enable computer 2001 to access a computer network such as a Local Area Network (LAN), a Wide Area Network (WAN), a Personal Area Network (PAN), or the Internet through a variety of wired and/or wireless or cellular connections.

In some implementations, the computing device 2001 may execute an application on behalf of a user of a client computing device. For example, the computing device 2001 may execute a virtual machine, which provides an execution session within which applications execute on behalf of a user or a client computing device, such as a hosted desktop session. The computing device 2001 may also execute a terminal services session to provide a hosted desktop environment. The computing device 2001 may provide access to a computing environment including one or more of: one or more applications, one or more desktop applications, and one or more desktop sessions in which one or more applications may execute.

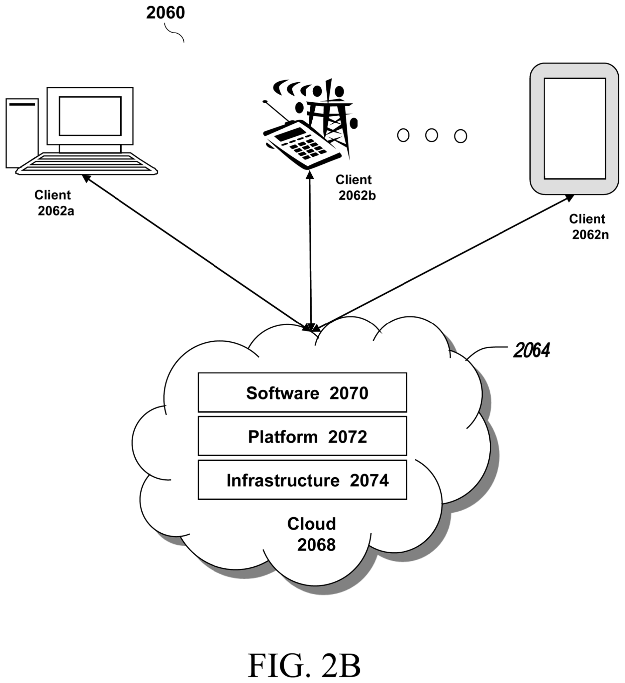

Referring to FIG. 2B, a computing environment 2060 is depicted. Computing environment 2060 may generally be considered implemented as a cloud computing environment, an on-premises ("on-prem") computing environment, or a hybrid computing environment including one or more on-prem computing environments and one or more cloud computing environments. When implemented as a cloud computing environment, also referred as a cloud environment, cloud computing or cloud network, computing environment 2060 can provide the delivery of shared services (e.g., computer services) and shared resources (e.g., computer resources) to multiple users. For example, the computing environment 2060 can include an environment or system for providing or delivering access to a plurality of shared services and resources to a plurality of users through the internet. The shared resources and services can include, but are not limited to, networks, network bandwidth, servers, processing, memory, storage, applications, virtual machines, databases, software, hardware, analytics, and intelligence.

In some embodiments, the computing environment 2060 may provide client 2062 with one or more resources provided by a network environment. The computing environment 2062 may include one or more clients 2062a-2062n, in communication with a cloud 2068 over one or more networks 2064. Clients 2062 may include, e.g., thick clients, thin clients, and zero clients. The cloud 108 may include back end platforms, e.g., servers 106, storage, server farms or data centers. The clients 2062 can be the same as or substantially similar to computer 2001 of FIG. 2A.

The users or clients 2062 can correspond to a single organization or multiple organizations. For example, the computing environment 2060 can include a private cloud serving a single organization (e.g., enterprise cloud). The computing environment 2060 can include a community cloud or public cloud serving multiple organizations. In some embodiments, the computing environment 2060 can include a hybrid cloud that is a combination of a public cloud and a private cloud. For example, the cloud 108 may be public, private, or hybrid. Public clouds 108 may include public servers that are maintained by third parties to the clients 2062 or the owners of the clients 2062. The servers may be located off-site in remote geographical locations as disclosed above or otherwise. Public clouds 2068 may be connected to the servers over a public network 2064. Private clouds 2068 may include private servers that are physically maintained by clients 2062 or owners of clients 2062. Private clouds 2068 may be connected to the servers over a private network 2064. Hybrid clouds 2068 may include both the private and public networks 2064 and servers.

The cloud 2068 may include back end platforms, e.g., servers, storage, server farms or data centers. For example, the cloud 2068 can include or correspond to a server or system remote from one or more clients 2062 to provide third party control over a pool of shared services and resources. The computing environment 2060 can provide resource pooling to serve multiple users via clients 2062 through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In some embodiments, the computing environment 2060 can provide on-demand self-service to unilaterally provision computing capabilities (e.g., server time, network storage) across a network for multiple clients 2062. The computing environment 2060 can provide an elasticity to dynamically scale out or scale in responsive to different demands from one or more clients 2062. In some embodiments, the computing environment 2060 can include or provide monitoring services to monitor, control and/or generate reports corresponding to the provided shared services and resources.

In some embodiments, the computing environment 2060 can include and provide different types of cloud computing services. For example, the computing environment 2060 can include infrastructure as a service (IaaS). The computing environment 2060 can include platform as a service (PaaS). The computing environment 2060 can include serverless computing. The computing environment 2060 can include software as a service (SaaS). For example, the cloud 2068 may also include a cloud based delivery, e.g., software as a service (SaaS) 2070, platform as a service (PaaS) 2072, and infrastructure as a service (IaaS) 2074. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, google compute engine provided by Google Inc. of Mountain View, California, or RIGHTSCALE provided by Right Scale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g., DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 2062 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP and may use Representational State Transfer (REST) protocol or Simple Object Access Protocol (SOAP). Clients 2062 may access PaaS resources with different PaaS interfaces. Some PaaS interfaces use HTTP packages, standard Java APIs, Java Mail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 2062 may access SaaS resources through the use of web-based user interfaces, provided by a web browser (e.g., GOOGLE CHROME, Microsoft INTERNET EXPLORER, or Mozilla Firefox provided by Mozilla Foundation of Mountain View, California). Clients 2062 may also access SaaS resources through smartphone or tablet applications, including, e.g., Salesforce Sales Cloud, or Google Drive app. Clients 2062 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

Although examples of communications systems described above may include devices operating according to an Ethernet and other standards, it should be understood that embodiments of the systems and methods described can operate according to alternative standards and use various wireless communication devices. For example, multiple-unit communication interfaces associated with cellular networks, satellite communications, vehicle communication networks, wired networks, and networks can utilize the systems and methods described herein without departing from the scope of the systems and methods described herein.

### D. Systems and Methods for Periodic Monitoring of Network Latency

Below are detailed descriptions of various concepts related to, and embodiments of, techniques, approaches, methods, apparatuses, and systems for periodic monitoring of network latency. The various concepts introduced above and discussed in greater detail below may be implemented in any of numerous ways, as the described concepts are not limited to any particular manner of implementation. Examples of specific embodiments and applications are provided primarily for illustrative purposes.

The technical solutions disclosed herein improve latency monitoring in communication networks by evaluating latency across multiple nodes. A client device can receive, from each node of a plurality of nodes between the client device and a device providing access to an internet service provider (ISP), a packet identifier and a timestamp for each data packet selected by each node (e.g., randomly). The client device can identify, for each packet identifier received from a corresponding node, a second timestamp corresponding to the receipt of each data packet by the client device. Based on the timestamps associated with each packet identifier and the second timestamps recorded for those packet identifiers, the client device can determine a respective latency between the client device and each corresponding node. The client device can then identify one or more nodes among the plurality of nodes where the respective latency exceeds a defined threshold. The protocol utilized for node-to-client latency measurement is also applicable to node-to-node latency measurement to allow nodes to determine their latency relative to other nodes in the network. Thus, the technical solutions disclosed herein can enhance the ability to monitor and evaluate, thereby facilitating efficient identification of latency sources and supporting improved performance in communication networks.

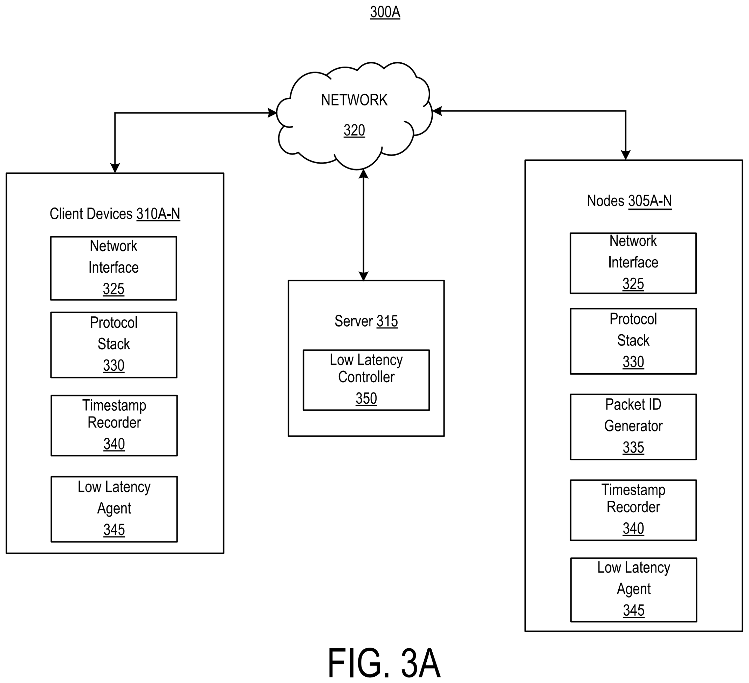

FIG. 3A illustrates an example system 300A for periodic monitoring of network latency. Example system 300A can include one or more nodes 305A-305N (sometimes referred to herein as a node 305) communicatively coupled with one or more client devices 310A-310N (sometimes referred to herein as a client device 310) via one or more networks 320. One or more components of the system 300A can communicate via network 320. Any of the systems described in connection with FIGS. 1A-1F and 2A-2B can be configured, constructed, or implemented to implement, operate, and/or use any of the options and techniques described in FIG. 3A.

The node 305 can be any type or form of a device. The node can be or include any system, software, application, virtual machine, container, or set of instructions executable on the device. The node 204 can be configured to communicate, receive, transmit, process, forward, manage, monitor, or otherwise interact with network traffic within or of a network. The node 305 can be positioned at various points within the network infrastructure and can be integrated with hardware and software elements to improve network performance.

In some embodiments, a node, such as node 305, can be or include an optical line terminal (OLT) in a passive optical network (PON) or a cable modem termination system (CMTS) in a hybrid fiber-coaxial (HFC) network. A PON is a fiber-optic access network architecture that uses passive optical splitters to distribute optical signals from a single point (the OLT) to multiple end-user locations (ONUs). PONs can be used for fiber-to-the-home (FTTH), fiber-to-the-building (FTTB), and fiber-to-the-curb (FTTC) deployments. Different PON technologies exist, such as EPON (Ethernet PON), GPON (Gigabit PON), and XG-PON (10-Gigabit-capable PON), each providing varying bandwidth capabilities. An HFC network is a telecommunications network architecture that combines optical fiber and coaxial cable. Fiber optic cables can be used for the main trunk lines, carrying signals from the headend (where the CMTS is located) to optical nodes closer to the end-users. From these optical nodes, coaxial cable can be used for the connection to individual homes or businesses. HFC networks can be used by cable television providers to deliver television, internet, and phone services. HFC networks can leverage existing coaxial infrastructure while incorporating fiber optics to increase bandwidth and improve performance. An OLT/CMTS can function as a central point of connection and control within its respective network architecture. The OLT/CMTS can provide access to an internet service provider (ISP). The OLT/CMTS can manage upstream and downstream traffic flow between end-user devices (such as optical network units (ONUs) or cable modems) and the wider network or internet. The OLT/CMTS can be configured to implement signal conversion, bandwidth allocation, quality of service (QoS) management, and network monitoring, among others.

In some embodiments, a node, such as node 305, can be or include an optical network unit (ONU) in the PON or a cable modem (CM) in the HFC network. An ONU/CM can reside at the customer premises or end-user location. The ONU/CM can function as an interface between the local network and the wider network provided by the OLT/CMTS. The ONU/CM can be configured to implement signal conversion (optical to electrical or RF to electrical), data modulation/demodulation, and other functionalities, such as routing, Wi-Fi access, and voice services, among others.

In some embodiments, a node, such as node 305, can be or include an access point that allows wireless communication devices to connect to a network using Wi-Fi or other standards. The access point can sometimes be referred to as a wireless access point (WAP). The access point can include components, such as an antenna for transmitting and receiving wireless signals, a radio device for managing wireless communications, a CPU for processing data and control operations, and memory (DDR) for storing operational data and configurations. The access point can be implemented to support a standard for sending and receiving data using one or more radio frequencies. Those standards, and the frequencies they use, can be defined by the IEEE (e.g., IEEE 802.11 standards). The access point can be configured and/or used to support internet hotspots and/or on a network to extend the network's Wi-Fi signal range.

In some embodiments, a node, such as node 305, can be or include a mesh node. A mesh node is a network device that forms part of a mesh network, a type of network topology where each node relays data for the network. The mesh networks can allow data to travel along multiple paths, providing redundancy and increased reliability. A mesh node can communicate with one or more other mesh nodes, forwarding data packets until they reach their destination. The mesh nodes can be wireless, wired, or a combination of both. The mesh nodes can be implemented using various technologies, including Wi-Fi (IEEE 802.11 standards), Zigbee, and other mesh networking protocols. The mesh nodes can extend network coverage, improve network resilience, and simplify network deployment.

The client device 310 (also referred to as a station) can be a wireless communication device configured for wireless communication in wireless communication networks, such as a local area network (LAN), wide area network (WAN), or cellular network. The client device 310 can be configured to communicate wirelessly with network devices, such as nodes 305, using any of the IEEE 802.11 standards or other relevant wireless communication protocols. The client device 310 can be any of the user devices described in connection with FIGS. 1A-1F. The client device 310 can correspond to a broad range of devices such as smartphones, tablets, laptops, desktop computers, IoT devices, and other equipment. In some embodiments, the client device 310 can include one or more clients 2062, as described in FIG. 2B, or one or more client devices connected to the network 320 or the network 2064 to access resources or services hosted on those networks. In some embodiments, the client device 310 (e.g., computers, set-top boxes, AR/VR sets, or gaming consoles) can establish a wired connection to the network 320 or other network infrastructure using either Ethernet or coaxial cables, depending on the network technology being used. The client device 310 can support multiple network interfaces concurrently, allowing it to connect to different networks using different technologies (e.g., Wi-Fi and Ethernet simultaneously).

The example system 300A can further include one or more servers 315. The server 315 can be referred to herein as a latency server, such as the latency server 1005, as described in connection with FIGS. 1A-1F. In some embodiments, a low latency controller 350 (or a subset of its functionalities) can be integrated into the server 315. The low latency controller 350 can evaluate data collected from various sources, such as nodes 305 and client devices 310, to identify latency hotspots, detect performance degradation, and implement latency mitigation strategies. The server 315 and/or the low latency controller 350 can be configured to communicate with the nodes 305 and the client devices 310 via the network 320.

The network 320 can include any type or form of network. The network 320 can be any form of computer network that can relay information among the nodes 305, the client devices 310, and the server 315. The network 320, for example, similar to the network 2064 described in connection with FIG. 2B, can include computer networks such as the internet, local, wide, metro, or other area networks, intranets, satellite networks, other computer networks such as voice or data mobile phone communication networks, and combinations thereof.

The node 305 can include, interface with, communicate with, or otherwise utilize a network interface 325. The network interface 325 can be or include any script, file, program, application, set of instructions, or computer-executable code configured to manage the transmission and reception of network packets at the medium access control (MAC) and physical (PHY) layers. At the MAC layer, the network interface 325 can manage media access control (including MAC address handling, CSMA/CA for wireless or CSMA/CD for wired, and frame formatting). For wireless communication, the network interface 325 can include radio frequency (RF) transceivers that manage the transmission and reception of wireless signals at the PHY layer, operating on specific frequencies (e.g., 2.4 GHz, 5 GHz, 6 GHz) and channel widths and supporting various IEEE 802.11 standards. The PHY layer can include hardware components such as transceivers and modulators/demodulators that can manage signal encoding/decoding and modulation/demodulation, converting digital data into analog or RF signals for transmission over the network medium. In some embodiments, the network interface 325 can include an Ethernet port for wired network connectivity. The network interface 325 can further include antenna(s) to enhance wireless signal strength and coverage. The network interface 325 can include onboard processors and memory that can manage network protocol processing, data buffering, and device management functions. The network interface 325 can also include firmware and a management interface that allows administrators to manage network parameters and security protocols and perform firmware updates.

The node 305 can include, interface with, communicate with, or otherwise utilize a protocol stack 330. The protocol stack 330 can be or include any script, file, program, application, set of instructions, or computer-executable code configured to facilitate clock synchronization using the precision time protocol (PTP). The protocol stack 330 can manage the exchange of PTP messages (e.g., Sync, Delay_Req, Delay_Resp, Follow_Up) to synchronize the node's local clock with a PTP grandmaster clock or other PTP time sources within the network. The protocol stack 330 can manage the transmission and reception of PTP messages and can configure or request hardware timestamping of these messages at the network interface level. The protocol stack 330 can include one or more layers, each configured for specific aspects of PTP, such as physical layer signal processing for PTP message transport, MAC layer frame formatting and configuration of hardware timestamp insertion, and higher-layer protocol management for PTP message processing and clock synchronization algorithms. The protocol stack 330 can manage the high-level logic and control of the PTP synchronization process, including initiating and terminating PTP sessions, managing clock servo algorithms to adjust the local clock based on received PTP timestamps, and managing clock offset calculations and corrections. The protocol stack 330 can implement the IEEE 1588 standard, which defines PTP. The protocol stack 330 can manage interoperation or fallback to other time synchronization protocols, such as a network time protocol (NTP), if PTP is not available or feasible.

The node 305 can include, interface with, communicate with, or otherwise utilize a packet identifier (ID) generator 335. The packet ID generator 335 can be or include any script, file, program, application, set of instructions, or computer-executable code configured to randomly select a data packet and generate a corresponding packet identifier. A data packet can refer to a unit of data transmitted over a network. The data packet can include a header, including control information (such as source and destination addresses), and a payload, including the actual data being transmitted. A packet identifier can be or include a label or tag associated with a specific data packet. The packet identifier can take various forms, such as a numerical sequence, a timestamp, a hash value, or any other suitable representation. A packet identifier can distinguish one data packet from another or one corresponding node from another.

The packet ID generator 335 can include any type or form of scheme to select one or more packets from one or more data flows. For example, the packet ID generator 335 can execute a timer or counter to trigger the packet selection process at regular intervals (e.g., every 1-5 seconds). When the timer expires, the packet ID generator 335 can select a packet from the current stream of traffic. A data flow can refer to a sequence of data packets transmitted between a specific source and destination over a network. The packet ID generator 335 can monitor multiple data flows and select packets from each flow based on the configured selection scheme. In some embodiments, the packet ID generator 335 can execute a pseudorandom number generator (PRNG) or other suitable random selection algorithm to randomly select data packets traversing the corresponding node 305. The packet ID generator 335 can extract relevant information from the selected data packet to generate the packet identifier. For example, the packet identifier can include five-tuple information, including the source internet protocol (IP) address, destination IP address, source port, destination port, and transport protocol (e.g., transmission control protocol (TCP) or user datagram protocol (UDP)). The packet ID generator 335 can extract the five-tuple information from the packet header. The packet identifier can further include a TCP sequence number. A TCP sequence number can be a 32-bit number included in the TCP header that is used to facilitate reliable and ordered delivery of data segments. The TCP sequence number can be used to identify/track the position of the current data segment within the overall data stream being transmitted. The packet ID generator 335 can extract the TCP sequence number from the TCP header of the selected packet. In some embodiments, where the transport protocol is UDP, the packet ID generator 335 can extract the UDP five-tuple information and checksum from the selected data packet to generate the packet identifier. The checksum can be the checksum included in the UDP packet or a per-packet signature generated by the packet ID generator 335 at the node 305. In some embodiments, the signature can be generated by the low latency controller 350 at the server 315.

The packet ID generator 335 can include a node identifier identifying the node 305 that generated the packet identifier. The packet ID generator 335 can append or prepend the node identifier to the five-tuple (and TCP sequence number or checksum, as applicable) to generate the packet identifier. The packet ID generator 335 can format the packet identifier as a string, a hash, or any other appropriate data structure. The packet ID generator 335 can store the generated packet identifier along with other relevant metadata for later retrieval and use by other components. The packet ID generator 335 can adjust the random selection rate or other parameters based on system requirements.

The node 305 can include, interface with, communicate with, or otherwise utilize a timestamp recorder 340. The timestamp recorder 340 can be or include any script, file, program, application, set of instructions, or computer-executable code configured to record a timestamp for each data packet randomly selected by the corresponding node 305. A timestamp can refer to a record of the time at which a specific event occurred. For example, in this case, the timestamp can refer to the record of the time a data packet traverses the corresponding node 305. The timestamp recorder 340 can receive notifications or triggers from the packet ID generator 335 indicating that a data packet has been selected for timestamping. The timestamp recorder 340 can utilize a high-resolution clock or timer available on the node 305 to generate or record the timestamps. The timestamp recorder 340 can be configured to record timestamps that closely correspond to the specific point in time when the selected data packet traverses the corresponding node 305, such as ingress or egress from a network interface. The timestamp recorder 340 can utilize hardware timestamping capabilities of the network interface card (NIC) to enhance timestamp accuracy. The timestamp recorder 340 can associate the recorded timestamps with the corresponding packet identifiers generated by the packet ID generator 335. The timestamp recorder 340 can generate a record to store the association. For example, the timestamp recorder 340 can store the timestamp and identifier pairs in a local memory buffer, a database, or another suitable storage mechanism. The timestamp recorder 340 can format the timestamps according to a specific time format relative to the Unix epoch or PTP time. The timestamp recorder 340 can be configured to address clock drift or other timing inaccuracies. The timestamp recorder 340 can minimize overhead to avoid impacting the performance of the node 305. The timestamp recorder 340 can provide an interface or API for other components within the node 305 to access the recorded timestamps.

In some embodiments, the timestamp recorder 340 can offload or transmit the recorded timestamp data, including one or more packet identifier and timestamp pairs, to a central collection point or analysis system (e.g., the client device 310 or the server 315). For example, the timestamp recorder 340 can interact with other components of the node 305, such as the network interface 325, to transmit the collected timestamp data, including one or more packet identifier and timestamp pairs, to the client device 310 or the server 315. The information can include, for the randomly selected data packet, the packet identifier and the timestamp. The transmission can occur at predefined time intervals, which can range, for example, from 1 to 5 seconds or vary depending on the system configurations. In some embodiments, the transmission can occur at variable time intervals, which are dynamically adjusted based on one or more factors. These factors can include available network bandwidth, CPU utilization of the node 305, or the processing load on the server 315 executing the low latency controller 350. The time intervals can also be randomly determined, such as within a range of 1 to 10 seconds. Furthermore, the transmission of timestamp and packet identifier records can be initiated by the node 305 (a push mechanism) or the server 315 (a pull mechanism). For example, the low latency controller 350 within the server 315 can request timestamps from the node 305 when latency exceeds a threshold or when network performance degradation affects the client device 310, resulting in a negative impact on quality of experience (QoE).

The node 305 can include, interface with, communicate with, or otherwise utilize a low latency agent 345. The latency agent 345 can be or include any system, device, software, application, virtual machine, container, or set of instructions executable on a physical or virtual device, configured to identify, manage, and control low latency applications. The low latency agent 345 can be the same version or different versions of a low latency agent or a latency server, such as the latency server 1005, as described in connection with FIGS. 1A-1F. The low latency agent 345 can provide localized management at the respective node 305 level. In some embodiments, the low latency agent 345 can provide rapid identification and classification of data packets associated with low latency applications using predefined markers, protocols, and detailed packet information, such as tuples (source/destination IP addresses and ports, protocol), headers (e.g., TCP, UDP, RTP), and content inspection (e.g., specific application-layer protocols or data patterns), among others. The low latency agent 345 can perform latency measurements on identified low latency traffic, using techniques such as timestamp comparisons or other suitable methods. The low latency agent 345 can coordinate with other components, such as a low latency controller 350 in the server 315 or other latency agents 345 in client devices 310 or other nodes, to implement end-to-end latency control and enhancement strategies. The low latency agent 345 can coordinate the corresponding node's internal components, such as packet schedulers, queues, and network interfaces, to prioritize and expedite the processing and forwarding of low latency packets. In some embodiments, the low latency agent 345 can transmit the timestamp/identifier information generated by the timestamp recorder 340 and packet ID generator 335 to other network entities for further analysis or latency calculations. The low latency agent 345 can implement congestion control mechanisms for low latency traffic, minimizing queuing delays and packet loss. The low latency agent 345 can be configured to dynamically adapt based on network conditions, application requirements, and feedback from other network components. The low latency agent 345 can collect data and generate statistical reports related to latency, jitter, and packet loss for low latency traffic.

As shown in FIG. 3A, various components of the client device 310 can be similar to, and include any of the structure and functionality of, their counterpart components described in connection with the nodes 305. The network interface 325 of the client device 310 can be similar to the network interface 325 of the node 305. The network interface 325 of the client device 310 can receive a packet identifier and a timestamp for each data packet randomly selected by the corresponding node 305. The network interface 325 can receive the packet identifier and the timestamp for each data packet from each node 305 at predefined time intervals. This periodic reception or transmission of data packets by the network interface 325, depending on the implementation, can facilitate continuous monitoring of network latency and performance over time. The network interface 325, or a higher-level management entity, can configure the predefined time intervals based on the desired monitoring frequency and network conditions. The network interface 325 can buffer or queue incoming packet identifier and timestamp information to manage variations in network traffic and processing delays. The network interface 325 can detect and process lost or corrupted packet identifier and timestamp information, such as using sequence numbers or checksums. The network interface 325 can utilize multiple receive queues or threads to process incoming information from different nodes concurrently. The network interface 325 can filter or prioritize incoming information based on specific criteria, such as node identifiers or packet types.

The protocol stack 330 of the client device 310 can be similar to, and include any of the structure and functionality of, the protocol stack 330 described in connection with the node 305. For example, the protocol stack 330 of the client device 310 can implement the PTP to synchronize its local clock with a grandmaster clock or other time sources/references on the network. The protocol stack 330 of the client device 310 can provide an accurate or reliable time base for various applications and processes running on the client device 310, including timestamping of network events or data packets.

The timestamp recorder 340 of the client device 310 can be similar to, and include any of the structure and functionality of, the timestamp recorder 340 described in connection with the node 305. When the client device 310, via the network interface 325, receives data packets, the timestamp recorder 340 can record or log a timestamp (e.g., a second or a local timestamp) corresponding to the receipt of the corresponding data packet by the client device 310. The timestamp recorder 340 can obtain or retrieve the timestamp from a high-resolution timer or clock available on the client device 310, for example, synchronized via PTP as described in connection with the protocol stack 330. The timestamp recorder 340 can associate the corresponding local/second timestamp of each received data packet with a packet identifier, such as the five-tuple information (source IP address, destination IP address, source port, destination port, and protocol) and the TCP sequence number of each data packet received by the client device 310. The timestamp recorder 340 can generate a record, including the association of the second timestamp with the five-tuple information and the TCP sequence number. The timestamp recorder 340 can implement the record using a data structure, such as a hash table, array, or database. The timestamp recorder 340 can maintain the record for a predefined duration. For example, the predefined duration can range from short time periods, such as 5-10 seconds, to longer durations, such as hours, days, or even weeks, depending on the application's requirements and available storage capacity. The timestamp recorder 340 can implement a time-to-live (TTL) mechanism or a circular buffer to manage the record and automatically remove older entries when the predefined duration expires, or the buffer reaches its capacity. The timestamp recorder 340 can provide an interface or API for other components within the client device 310 to access and retrieve the recorded timestamps and associated packet information. The timestamp recorder 340 can be configured to export or transmit the recorded data to external systems for analysis or long-term storage.

The timestamp recorder 340 of the client device 310 can identify, using the packet identifier received from a node 305, a corresponding second/local timestamp. For example, for each packet identifier received from a corresponding node 305, the timestamp recorder 340 can identify the second timestamp of receipt by the client device 310 for each data packet corresponding to that packet identifier. The timestamp recorder 340 can identify, for each packet identifier received from the corresponding node 305, the second/local timestamp from its stored record using the five-tuple information (source IP, destination IP, source port, destination port, protocol) and the TCP sequence number extracted from the received packet identifier. The timestamp recorder 340 can utilize the five-tuple and sequence number as a key to look up the corresponding timestamp in its local record. The timestamp recorder 340 can retrieve the associated second timestamp upon identifying a matching entry in its record.

The latency agent 345 of the client device 310 can be similar to, and include any of the structure and functionality of, the latency agent 345 described in connection with the node 305. For example, the latency agent 345 can provide localized management at the client device 310 level. The latency agent 345 can perform latency measurements. The latency agent 345 can determine, based at least on one or more timestamps associated with each of the packet identifiers received from the corresponding node 305 and the second timestamps recorded locally by the client device 310 for the same packet identifiers, a respective latency between the client device 310 and the corresponding node 305. For example, the latency agent 345 can determine the respective latency by calculating the difference between the second timestamp (recorded locally by the client device 310 upon receiving the original data packet) and the timestamp associated with the corresponding packet identifier received from the node 305. The latency agent 345 can quantify the time elapsed for the data packet to travel from the node 305 to the client device 310. The latency agent 345 can perform the calculation for each received packet identifier and its associated timestamp from each node 305, thereby determining individual packet latencies. The latency agent 345 can aggregate the individual packet latencies to calculate statistical measures, such as average latency, minimum latency, maximum latency, or other relevant metrics for each node 305. For example, if the latency agent 345 receives a packet identifier, including a node identifier, with a timestamp of 10:00:00.000 from a node (e.g., Node A) and the corresponding second timestamp recorded by the client device is 10:00:00.010, the latency agent 345 can determine the latency for that packet as 0.010 seconds (or 10 milliseconds). The latency agent 345 can use the calculated latencies for various purposes, such as identifying nodes with high latency, triggering alerts, or supporting network enhancement strategies.

In some embodiments, the latency measurement protocols described for the client device 310 can also be implemented within any node 305 of the network. Any node 305 can operate as a client-equivalent latency monitor, measuring latency between itself and other nodes 305. For example, a node (e.g., Node B) can receive timestamps and packet identifiers from another node (e.g., Node A), record its own local receive timestamps for those packets, and calculate the latency between Node A and Node B using the same timestamp difference method described above. This node-to-node latency measurement capability can allow each node 305 to evaluate its performance metrics relative to other nodes 305.

The latency agent 345 of the client device 310 can identify one or more nodes 305 having a respective latency above a predefined threshold. The latency agent 345 can compare the calculated latencies for each node 305 against the predefined threshold. The predefined threshold can be a configurable parameter, allowing adjustments based on network requirements and performance expectations. If the calculated latency for a particular node 305 exceeds the predefined threshold, the latency agent 345 can identify that node as experiencing high latency. The latency agent 345 can maintain a list or data structure of identified high-latency nodes. The latency agent 345 can consider multiple latency measurements over time before identifying a node as having consistently high latency, mitigating the impact of transient network fluctuations.

In some embodiments, when determining the latency introduced by a specific node (e.g., Node B), the latency agent 345 can identify situations where the calculated latency yields a negative value. For example, the latency introduced by Node B can be calculated as -5ms if the timestamp recorded by Node B (e.g., 10:00:00.005) is later than the timestamp recorded by a preceding node (e.g., Node A at 10:00:00.000). The negative latency associated with Node B can be attributed to clock drift or other timing inaccuracies between the nodes 305. In this regard, the latency agent 345 can use the accurate time base provided by the protocol stack 330, which can implement the PTP. By using the PTP, the nodes 305 can maintain a synchronized time base and minimize the occurrence of negative latencies. After accounting for clock synchronization, if the calculated latency for a particular node 305 exceeds the threshold, the latency agent 345 can identify that node as experiencing high latency. The latency agent 345 can further categorize high-latency nodes based on the severity of the latency exceeding the threshold, allowing for prioritized management of the most problematic nodes.

The latency agent 345 can cause the client device 310 on which it is running to generate a notification for a user in response to determining that the respective latency for one or more nodes 305 exceeds the predefined threshold. The client device 310 can provide the notification to the user through various means, such as a visual alert on the device's screen, an audible alarm, or a notification within a specific application. The notification can include information about the affected node(s) 305, the measured latency, and the configured threshold, among others. The latency agent 345 can cause the client device 310 to generate aggregated latency data to provide an indication of network latency trends over time. The aggregated data can include statistical measures such as average latency, minimum latency, maximum latency, jitter (variation in latency), and packet loss rate, among others. The aggregated latency data can be collected over different time intervals (e.g., seconds, minutes, hours) and stored in a local database or log file on the client device 310. The aggregated data can be used for various purposes, such as generating alerts when specific latency patterns are detected, triggering network diagnostics to identify the root cause of latency issues, informing traffic routing decisions to avoid congested or high-latency paths, or providing historical data for network performance analysis. In some embodiments, the aggregated data can be presented to the user through visualizations such as graphs or charts, providing a clear overview of network performance over time. The latency agent 345 can be configured to transmit the aggregated latency data to a central network management system for centralized monitoring and analysis.

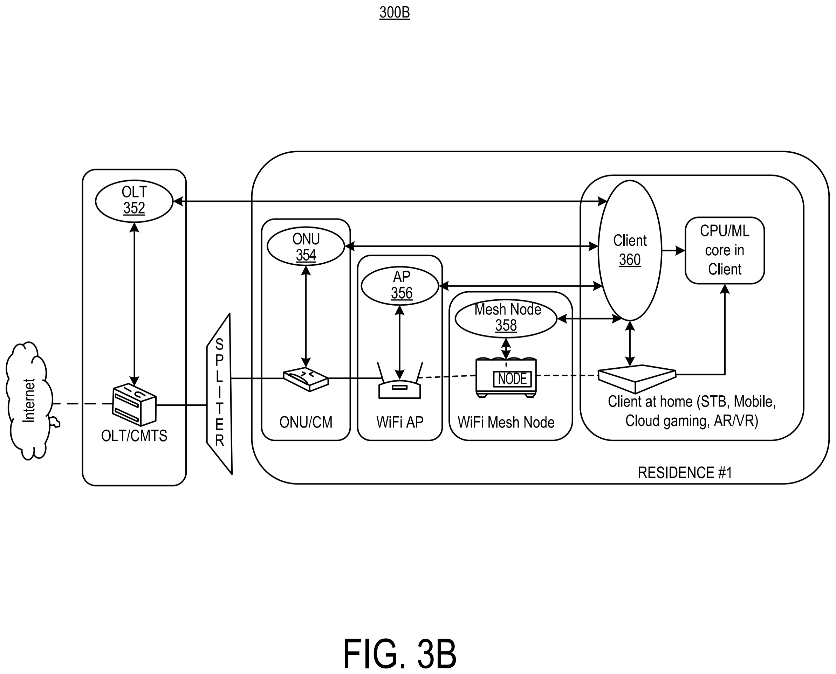

FIG. 3B illustrates another example system 300B for periodic monitoring of network latency. Various components of the system 300B shown in FIG. 3B can be similar to, and include any of the structure and functionality of, the corresponding components in the system 300A of FIG. 3A. For example, the optical line terminal (OLT) 352, the optical network unit (ONU) 354, the Wi-Fi access point (AP) 356, and the Wi-Fi mesh node 358 can be similar to, and include any of the structure and functionality of, the node 305 of FIG. 3A. Similarly, the client 360 can be similar to, and include any of the structure and functionality of, the client device 310 of FIG. 3A.

In a PON deployment, the OLT 352 can include or correspond to central office equipment providing connectivity to the internet. A splitter can distribute the optical signal from the OLT 352 to one or more ONUs 354 located at customer premises (e.g., Residence #1). The ONU 354 can convert the optical signal to an electrical signal for use within a home network. In an HFC deployment, the OLT 352 can include or correspond to a CMTS, and the ONU 354 can include or correspond to a cable modem (ONU/CM). The Wi-Fi AP 356 can provide wireless connectivity within the residence, allowing wireless communication devices to connect to the network. The Wi-Fi mesh node 358 can extend the Wi-Fi coverage within the residence by wirelessly relaying traffic between the Wi-Fi AP 356 and other devices. The client 360 can include or correspond to a user device within the residence. The client 360 can be any device that connects to the network, such as a set-top box (STB) for television services, a mobile device (e.g., smartphone, tablet), a cloud gaming device, or an augmented/virtual reality (AR/VR) headset. In some embodiments, the client 360 can include a CPU/ML core for local processing and machine learning tasks.

Each node (e.g., OLT/CMTS 352, ONU/CM 354, Wi-Fi AP 356, Wi-Fi mesh node 358) can monitor a subset or a sample of data packets routed to the client 360. Each node can periodically (at regular intervals) or invariably (at adjustable intervals) log the timestamps of randomly selected data packets traversing the node at adjustable intervals (e.g., every 1 to 3 seconds, depending on the implementation). These data packets can be associated with a low latency application running on the client 360. Each node can generate a corresponding packet identifier (e.g., five-tuple information, TCP sequence number, and node identifier). Each node can periodically or invariably send/transmit the collected packet identifiers and corresponding timestamps to the low latency agent/controller on the client 360. The client 360, such as an STB, can timestamp every received data packet and keep track of the packet identifiers and its own local timestamps for predefined time intervals (e.g., approximately 5-10 seconds, or adjustable depending on the implementation). For example, the ONU 354 can log PACKET_ID_X_AT_ONU and TIMESTAMP_X_AT_ONU, and after 3 seconds, PACKET_ID_Y_AT_ONU and TIMESTAMP_Y_AT_ONU. The ONU 354 can transmit these packet identifiers and the corresponding timestamps to the client 360. The client 360, having its own timestamps for all received data packets (including those corresponding to X and Y), can evaluate the ONU-to-client packet latency. The latency for packet X can be calculated as TIMESTAMP_X_AT_Client - TIMESTAMP_X_AT_ONU, and similarly the latency for packet Y can be calculated as TIMESTAMP_Y_AT_Client - TIMESTAMP_Y_AT_ONU. This process can be repeated periodically or invariably to monitor latencies for packets from the CMTS/OLT, CM/ONU, Wi-Fi AP, and Wi-Fi mesh node.

For improved accuracy, each device can synchronize corresponding timestamps using the PTP (IEEE 1588). In some embodiments, where timestamps have offsets or errors, the client 360 can monitor variations in latency metrics rather than relying on absolute timestamp values. Each node can be configured to transmit timestamp information for individual data packets or as a collection of multiple timestamps, which can be transmitted in batches at intervals of 10-15 seconds, for example. The nodes can continuously transmit timestamp data, or the client 360 can request this data during detected periods of network unresponsiveness. A latency agent/controller operating on the client 360 can trigger the generation of notifications or messages for the end user, such as indicating that Wi-Fi latency is increasing or that an AR/VR user is moving away from the Wi-Fi AP 356. The client 360 can be further configured to share latency data with internet service providers (ISPs).

In some embodiments, latency variations, along with other information such as data rates, error rates, Wi-Fi retransmissions, and signal-to-noise ratios (SNRs), can be continuously tracked by machine learning hardware at the client 360 to provide detailed information to the user or even generate recommendations for the user. The machine learning hardware at the client 360 can collect and process the network performance metrics in real-time or near real-time. The latency variations can be measured by evaluating the fluctuations in packet arrival times. The data rates can be determined by monitoring the volume of data transmitted and received over specific time intervals. The error rates, including packet loss and corruption, can be assessed by evaluating packet headers and checksums. The number of Wi-Fi retransmissions can be monitored by observing the MAC layer retransmission counters. The SNR can be measured by the Wi-Fi interface hardware. The machine learning hardware can implement various algorithms, such as time series analysis, statistical modeling, or neural networks, to evaluate the collected data and identify patterns, anomalies, and other network issues. The machine learning hardware can correlate the observed latency variations with other metrics, such as data rates, error rates, retransmissions, and SNRs, to identify the root causes of latency problems. For example, high latency coupled with low SNR and frequent retransmissions can indicate a weak Wi-Fi signal or interference. The machine learning hardware can provide the detailed information to the user through a user interface. The presentation can include visualizations, such as graphs showing latency trends over time or diagnostic reports highlighting specific network issues. In some embodiments, the machine learning hardware can recommend appropriate devices to avoid or mitigate network problems. For example, if the analysis indicates poor Wi-Fi coverage, the system can recommend purchasing a Wi-Fi extender or a mesh Wi-Fi system. If the analysis suggests that the client 360 itself is the bottleneck, the system can recommend upgrading to a device with better network capabilities. The machine learning hardware can also take into account user-specific factors, such as their network usage patterns and application requirements, when generating recommendations.

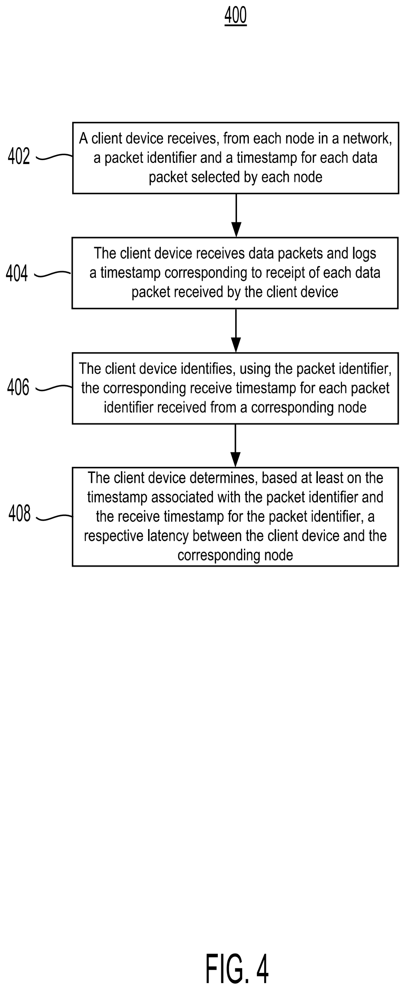

FIG. 4 illustrates an example method 400 of periodic monitoring of network latency. The method 400 can be implemented using a system 100, 300, or any other features discussed in FIGS. 1-3. The method 400 can include acts 402-408. At 402, a client device can receive, from each node in a network, a packet identifier and a timestamp for each data packet selected by each node. At 404, the client device can receive data packets and log a timestamp corresponding to receipt of each data packet received by the client device. At 406, the client device can identify, using the packet identifier, the corresponding receive timestamp for each packet identifier received from a corresponding node. At 408, the client device can determine, based at least on the timestamp associated with the packet identifier and the receive timestamp for the packet identifier, a respective latency between the client device and the corresponding node.

At 402, a client device can receive, from each node in a network, a packet identifier and a timestamp for each data packet selected by each node. Each node in the network can be configured to randomly select each data packet of a plurality of data packets. The client device can receive, from each node of a plurality of nodes between the client device and a device providing access to an internet service provider (ISP), a packet identifier and a timestamp for each data packet of the plurality of data packets randomly selected by each node. The client device can receive, at predefined time intervals, from each node, the packet identifier and the timestamp for each packet of one or more data flows traversing the network. For example, one data flow can include packets traversing from an optical line terminal (OLT) or cable modem termination system (CMTS) to the client device. For this data flow, the client device can receive, from the OLT/CMTS, a packet identifier and a corresponding timestamp for each of a plurality of data packets randomly selected by the OLT/CMTS. Similarly, another data flow can include packets traversing from an optical network unit (ONU) or cable modem (CM) to the client device. For this data flow, the client device can receive, from the ONU/CM, a packet identifier and a corresponding timestamp for each of a plurality of data packets randomly selected by the ONU/CM. The packet identifier can include five-tuple information and a transport protocol identifier for each randomly selected data packet. The transport protocol identifier includes a transmission control protocol (TCP) sequence number when the transport protocol is TCP, and the transport protocol identifier includes a checksum when the transport protocol is user datagram protocol (UDP). The packet identifier can further include a node identifier identifying a node that generated the packet identifier. Each node can be configured to synchronize the timestamp of the randomly selected data packet with a precision time protocol (PTP).

At 404, the client device can receive data packets and log a timestamp corresponding to receipt of each data packet received by the client device. The client device can associate this receive timestamp with identifying information for the received data packet, such as the five-tuple information and the transport protocol identifier. The client device can generate a record, including the association of the receive timestamp with the five-tuple information and the transport protocol identifier. The client device can maintain the record for a predefined duration.

At 406, the client device can identify, using the packet identifier, the corresponding receive timestamp for each packet identifier received from a corresponding node. For example, the client device can perform a lookup operation to identify the corresponding receive timestamp associated with the received packet identifier. For each packet identifier received from a corresponding node (e.g., OLT, ONU, Wi-Fi AP, or Wi-Fi mesh node), the client device can query its internal/local record. The client device can utilize the five-tuple information (source IP address, source port, destination IP address, destination port, and protocol) and the transport protocol identifier associated with the received packet identifier as a key for the lookup. In this manner, the client device can correlate the timestamp provided by a network node with its record when the packet is received.

At 408, the client device can determine, based at least on the timestamp associated with the packet identifier and the receive timestamp for the packet identifier, a respective latency between the client device and the corresponding node. The client device can determine a respective latency between the client device and the corresponding node based at least on one or more timestamps associated with each of one or more packet identifiers received from the corresponding node and the receive timestamp recorded by the client device for the corresponding packet. For example, if the ONU transmits a packet with timestamp T1, and the client device records the reception of the same packet at time T2, the latency for the node can be calculated as T2 - T1. This calculation can be repeated for multiple packets from the same node to gather statistical data about the latency characteristics of the corresponding network segment.

In some embodiments, the client device can identify one or more nodes having the respective latency above a threshold. For example, the client device can identify one or more nodes of the plurality of nodes having the respective latency above a threshold. For instance, if the latency between the client device and the Wi-Fi access point consistently exceeds a threshold of 50 milliseconds, for example, the client device can identify the Wi-Fi access point as a potential source of latency issues. The client device can generate a notification in response to determining that the respective latency exceeds the threshold. The client device can generate aggregated latency data to provide an indication of network latency over time. In some embodiments, the protocol utilized for node-to-client latency measurement is also applicable to node-to-node latency measurement to allow nodes to determine their latency relative to other nodes in the network.

It should be noted that certain passages of this disclosure may reference terms such as "first" and "second" in connection with devices, modes of operation, transmit chains, roles, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected (which may refer to electronic or communicative coupling or connection, such as for the purposes of data transmission) include indirect and direct couplings and connections.

While the disclosure has been described with respect to specific embodiments, one skilled in the art will recognize that numerous modifications are possible. For instance, although specific examples of rules (including triggering conditions and/or resulting actions) and processes for generating suggested rules are described, other rules and processes can be implemented. Embodiments of the disclosure can be realized using a variety of computer systems and communication technologies including but not limited to specific examples described herein.

Embodiments of the present disclosure can be realized using any combination of components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present disclosure may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium).

Thus, although the disclosure has been described with respect to specific embodiments, it will be appreciated that the disclosure is intended to cover all modifications and equivalents within the scope of the following claims.

It should be understood that the disclosed embodiments are not representative of all claimed innovations. As such, certain aspects of the disclosure have not been discussed herein. Alternate embodiments that may not have been presented for a specific portion of the innovations or that further undescribed alternate embodiments may be available for a portion is not to be considered a disclaimer of those alternate embodiments. Thus, it is to be understood that other embodiments can be utilized and functional, logical, operational, organizational, structural and/or topological modifications may be made without departing from the scope of the disclosure. As such, all examples and/or embodiments are deemed to be non-limiting throughout this disclosure.

Some embodiments described herein relate to methods. It should be understood that such methods can be computer implemented methods (e.g., instructions stored in memory and executed on processors). Where methods described above indicate certain events occurring in a certain order, the ordering of certain events can be modified. Additionally, certain of the events can be performed repeatedly, concurrently in a parallel process when possible, as well as performed sequentially as described above. Furthermore, certain embodiments can omit one or more described events.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for a specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field-programmable gate array (FPGA), and/or an application-specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as those produced by a compiler, code used to produce a web service, and files containing higher-level instructions that are executed by a computer using an interpreter. For example, embodiments can be implemented using Python, Java, JavaScript, C++, and/or other programming languages and software development tools. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features may not necessarily be limited to a particular order of execution, but rather, any number of threads, processes, services, servers, and/or the like that may execute serially, asynchronously, concurrently, in parallel, simultaneously, synchronously, and/or the like in a manner consistent with the disclosure. As such, some of these features may be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood as open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

## Claims

1. A system, comprising:
a client device comprising one or more processors, coupled with memory, to:
receive, from each node of a plurality of nodes between the client device and a device providing access to an internet service provider (ISP), a packet identifier and a timestamp for each data packet of a plurality of data packets selected by each node;
identify, for each packet identifier received from a corresponding node, a second timestamp of receipt by the client device of each data packet corresponding to each packet identifier; and
determine, based at least on one or more timestamps associated with each of one or more packet identifiers received from the corresponding node and one or more second timestamps for the one or more packet identifiers, a respective latency between the client device and the corresponding node.

2. The system of claim 1, wherein
the client device is further configured to identify one or more nodes of the plurality of nodes having the respective latency above a threshold.

3. The system of claim 1 or 2, wherein
the packet identifier comprises five-tuple information, a transmission control protocol (TCP) sequence number, and a node identifier identifying a node that generated the packet identifier.

4. The system of any one of the claims 1 to 3, wherein
each node of the plurality of nodes is configured to randomly select each data packet of the plurality of data packets.

5. The system of claim 3, wherein the client device is further configured to:
associate a corresponding second timestamp with the five-tuple information and the TCP sequence number of each data packet received by the client device; and
generate a record comprising the association of the second timestamp with the five-tuple information and the TCP sequence number.

6. The system of claim 5, wherein the client device is further configured to
maintain the record for a predefined duration
and/or to
identify, for each packet identifier received from the corresponding node, using the five-tuple information and the TCP sequence number, the second timestamp from the record; and
determine, for the corresponding node, a difference between the second timestamp and the timestamp received from the corresponding node.

7. The system of any one of the claims 1 to 6, wherein the client device is further configured to
generate a notification in response to the respective latency being above a threshold;
wherein in particular
the client device is further configured to
generate aggregated latency data to provide an indication of network latency over time.

8. A system, comprising:
a plurality of nodes between a client device and a device providing access to an internet service provider (ISP), each node of the plurality of nodes comprising one or more processors, coupled with memory, to:
select a data packet of a plurality of data packets;
for the selected data packet:
generate a packet identifier, and
record a timestamp; and
transmit, to at least one of the client device or a second node of the plurality of nodes, for the selected data packet, the packet identifier and the timestamp to cause the at least one of the client device or the second node to determine, for a corresponding node, based at least on one or more timestamps associated with each of one or more packet identifiers received from the corresponding node and one or more second timestamps identified by the at least one of the client device or the second node for the one or more packet identifiers, a respective latency between the at least one of the client device or the second and the corresponding node.

9. The system of claim 8, wherein each node is further configured to
cause the at least one of the client device or the second node to determine, for each packet identifier received from the corresponding node, a difference between the second timestamp and the timestamp received from the corresponding node.

10. The system of claim 8 or 9, wherein each node is further configured to:
randomly select the data packet of the plurality of data packets; and
transmit, to the at least one of the client device or the second node, for the randomly selected data packet, the packet identifier and the timestamp at one or more time intervals.

11. The system of any one of the claims 8 to 10, wherein
the packet identifier comprises five-tuple information, a transmission control protocol (TCP) sequence number, and a node identifier identifying a node that generated the packet identifier.

12. The system of any one of the claims 8 to 11, wherein each node is further configured to
synchronize the timestamp of the selected data packet with a precision time protocol (PTP).

13. A method for monitoring network latency, comprising:
receiving, by a client device, from each node of a plurality of nodes between the client device and a device providing access to an internet service provider (ISP), a packet identifier and a timestamp for each data packet of a plurality of data packets selected by each node;
identifying, by the client device, for each packet identifier received from a corresponding node, a second timestamp of receipt by the client device of each data packet corresponding to each packet identifier; and
determining, by the client device, based at least on one or more timestamps associated with each of one or more packet identifiers received from the corresponding node and one or more second timestamps for the one or more packet identifiers, a respective latency between the client device and the corresponding node;
wherein in particular
the method further comprises
randomly selecting, by each node of the plurality of nodes, each data packet of the plurality of data packets.

14. The method of claim 13, wherein
the packet identifier comprises five-tuple information, a transport protocol identifier, and a node identifier identifying a node that generated the packet identifier.

15. The method of claim 14, further comprising:
associating, by the client device, a corresponding second timestamp with the five-tuple information and the transport protocol identifier of each data packet received by the client device; and
generating, by the client device, a record comprising the association of the second timestamp with the five-tuple information and the transport protocol identifier;
wherein in particular
the method further comprises
(A) maintaining, by the client device, the record for a predefined duration.
and/or
(B) identifying, by the client device, for each packet identifier received from the corresponding node, using the five-tuple information and the transport protocol identifier, the second timestamp from the record; and
determining, by the client device, for the corresponding node, a difference between the second timestamp and the timestamp received from the corresponding node.
